# EUROPEAN PATENT SPECIFICATION

(11) **EP 4 689 874 B1**
(45) Date of publication and mention of the grant of the patent: **09.09.2026**
(21) Application number: 24739196.4
(22) Date of filing: 03.07.2024
(51) Int. Cl.: G06F 7/49, H04L 9/00, H04L 9/30, G09C 1/00

(54) **BOOTSTRAPPING HOMOMORPHIC CIPHERTEXT**
BOOTSTRAPPING VON HOMOMORPHEM CHIFFRIERTEXT
AMORÇAGE DE TEXTE CHIFFRÉ HOMOMORPHE

(30) Priority: 04.07.2023 EP 23315269
(43) Date of publication of application: 11.02.2026
(73) Proprietor: Zama SAS, 75002 Paris (FR)
(72) Inventor: LIGIER, Damien, 75002 Paris (FR); ORFILA, Jean-Baptiste, 75002 Paris (FR); TAP, Samuel, 75002 Paris (FR)
(74) Representative: DeltaPatents B.V.
(86) International application number: PCT/EP2024/068705
(87) International publication number: WO 2025/008386

(56) References cited:
- JP-B2- 7 261 502
- US-A1- 2018 294 951
- US-A1- 2023 145 760
- CHILLOTTI ILARIA ET AL: "CONCRETE: Concrete Operates oN Ciphertexts Rapidly by Extending TfhE", WAHC 2020, 15 December 2020 (2020-12-15), pages 57 - 63, XP093203111, Retrieved from the Internet <URL:https://homomorphicencryption.org/wp-content/uploads/2020/12/wahc20_demo_damien.pdf> [retrieved on 20240909]
- LORIS BERGERAT ET AL: "Parameter Optimization & Larger Precision for (T)FHE", vol. 20220620:172436, 20 June 2022 (2022-06-20), pages 1 - 60, XP061074824, Retrieved from the Internet <URL:https://eprint.iacr.org/archive/2022/704/1655745876.pdf> [retrieved on 20220620]
- ILARIA CHILLOTTI ET AL: "Programmable Bootstrapping Enables Efficient Homomorphic Inference of Deep Neural Networks", vol. 20210127:133406, 25 January 2021 (2021-01-25), pages 1 - 18, XP061051918, Retrieved from the Internet <URL:https://eprint.iacr.org/2021/091.pdf> [retrieved on 20210125]
- SANGPYO KIM ET AL: "Accelerating Number Theoretic Transformations for Bootstrappable Homomorphic Encryption on GPUs", ARXIV.ORG, CORNELL UNIVERSITY LIBRARY, 201 OLIN LIBRARY CORNELL UNIVERSITY ITHACA, NY 14853, 3 December 2020 (2020-12-03), XP081828964, DOI: 10.1109/IISWC50251.2020.00033

## Description

### TECHNICAL FIELD

The presently disclosed subject matter relates to a method for reducing an error term in a ciphertext in a fully homomorphic cryptographic scheme, a system for reducing an error term in a ciphertext, and a computer readable media.

### BACKGROUND

Fully Homomorphic Encryption is a family of encryption schemes that allow performing computations over encrypted data. Homomorphic cryptography allows one to execute computer programs, e.g., circuit evaluations, function evaluations, etc., over encrypted data by a party without that party being able to decrypt. For example, input data and computation results may be received and returned in encrypted form. Intermediate data, e.g., an internal state of the computation, may also be in encrypted form. Even though the output of the computer program is returned in an encrypted form, when decrypted the output is expected to be the same, or very close to, as if the operations had been performed on the unencrypted data. Homomorphic encryption can be used for privacy-preserving outsourced storage and computation. This allows data to be encrypted and outsourced to a cloud environment for processing and/or storage, all while encrypted. In particular, homomorphic cryptography techniques exist that can be used, at least in principle, to compute any function on encrypted data. Such techniques are referred to as "fully homomorphic encryption" (FHE) techniques.

The execution environment may be provided by various homomorphic encryption techniques. One such homomorphic encryption system is described in I. Chillotti et al., "Programmable bootstrapping enables efficient homomorphic inference of deep neural networks", Cyber Security Cryptography and Machine Learning (CSCML 2021), vol. 12716 of Lecture Notes in Computer Science, pp. 1-19, Springer, 2021, DOI: 10.1007/978-3-030-78086-9_1. Further bootstrapping methods are described in, e.g., US 2023/0145760 A1.

Generally, FHE-like homomorphic encryption schemes can be based on lattice encryption, e.g., LWE or NTRU encryption. For example, encrypted data may be received as LWE-type ciphertexts. Using technologies as described in the above paper, computations can be performed on an LWE-type ciphertext even though the secret key is unknown to the homomorphic computing device.

Fully Homomorphic Encryption schemes use noisy ciphertexts for security reasons, e.g., ciphertexts containing some randomness. This noise grows after every performed homomorphic operation. If the noise is not controlled, it can compromise the message and cause incorrect decryption of the output ciphertexts at the user. A technique called bootstrapping, e.g., from [13], allows reducing the noise when it has grown. By using bootstrapping frequently, thus reducing noise when needed, one can perform as many homomorphic operations as one wants.

In some fully homomorphic encryption schemes, such as TFHE, the programmable bootstrapping suffers because it is dependent on the message space. The implies that complexities in time and memory get worse when the message space increases. It creates an upper bound on the size of the message space that can be bootstrapped. It is hardly feasible to bootstrap ciphertexts that have a message of 10 bits or more. Experiments showed it to be impossible for more than 12 bits using a 64-bit FFT for the polynomial multiplication. Even for much smaller message sizes, the bootstrapping becomes the dominating factor in the resources consumed by FHE computations.

The bootstrapping of TFHE-like schemes has been extensively studied. One of the main line of research was about enlarging the message that could be bootstrapped. In [14], the authors propose two methods to compute bootstrapping on large messages which have been previously split into smaller parts. The overall idea consists in applying a PBS with the same accumulator on all the inputs at a given level, and reduces the number of inputs at each iteration (hence the name of TreePBS). This method does not scale when the number of blocks increases, and quickly becomes unpractical.

The paper [9] introduces a new levelled multiplication in TFHE-like schemes along with a generalized version of the PBS. This improvement allows choosing a different frame of the message to be bootstrapped. By combining these two approaches, the author propose new versions of the PBS which do not require the MSB value of the plaintext to be known. This value is often referred to as the padding bit. By definition, this method improves the bootstrappable precision by one bit.

In the same vein, the authors of [17] propose a new method to compute the sign function using the PBS from TFHE-like schemes, which is then applied to compute the floor functions. Their approach is then generalized to compute any functions. In brief, their method performs two PBS evaluations to remove the need for a padding bit.

More recently, the authors of [1] proposed a new approach to compute a PBS over large precisions. Their method, based on a combination of circuit bootstrappings, CMux Tree and Blind Rotation has the advantage to offer better performance than [14].

The authors of [9a] propose an open-source library providing an interface by which FHE practically can be integrated, including PBS as an operation to perform on ciphertexts, resetting a noise at a fixed level while at the same time homomorphically evaluating a function on the input ciphertext.

Bootstrapping remains an expensive technique, both in terms of execution time and memory usage.

### SUMMARY

There is a need for a new approach towards bootstrapping. A method for reducing noise in a homomorphic ciphertext and a system configured therefor are described in the accompanying claims. Specific embodiments of the invention are set forth in the dependent claims.

In an embodiment, the error term is extracted from a first ciphertext into a third ciphertext. The first ciphertext comprises a homomorphic encryption of a message term. The first ciphertext also has an error term. By subtracting the extracted error term in the third ciphertext, a ciphertext is obtained that has the message term but with a reduced error term. Since the homomorphic operations involved themselves introduce noise, the output ciphertext may have some additional noise. For example, the programmable bootstrapping that may be employed in an embodiment need not accommodate the full precision of the error term.

Various approaches are possible to implement this. To extract the error term, one can remove the message term from the first ciphertext, and then apply a programmable bootstrap. Removing the message may be done homomorphically, e.g., by shifting left the ciphertext, or by repeatedly adding the message to itself. The programmable bootstrap may be a conventional bootstrap, e.g., that has a super-polynomial, e.g., exponential, time and/or space complexity in the size of the message.

For example, the ciphertext may be an LWE-type ciphertexts. Using technologies as described in the paper in the background, computations can be performed on an LWE-type ciphertext even though the secret key is unknown to the homomorphic computing device. An LWE-type ciphertext has the form (***a**, b*) wherein ***a*** is random vector, and b is a scalar; sometimes written as (*aᵢ*, *b*), wherein *i* is understood to run over the length of vector ***a**.* The LWE-type ciphertext encrypts a message scalar m for a secret vector ***s***, wherein *b =* 〈***a**, **s***〉 *+ m̃* + *e,* message *m* is encoded as *m̃*, e is a noise term, and 〈***a**, **s***〉 is the inner product. For example, the encoding *m̃* may be Δ*m*, wherein Δ represents a multiplier. The error term is added for security reasons.

Embodiments offer various advantages. For example, pre-processing the ciphertext can increase the amount of noise reduced in one iteration.

Embodiments may use TFHE encryption schemes, e.g., using LWE and/or GLWE ciphertexts. The conventional bootstrap for TFHE schemes is programmable. A bootstrap according to an embodiment does not need to be programmable. This eliminates the large look-up table, with a size exponential in the size of the message space. More generally, embodiments may use a fully homomorphic encryption scheme which includes a programmable bootstrapping algorithm, which is able to take as input a ciphertext and to output a ciphertext of the same message with less noise, e.g., while evaluating the homomorphic decryption of the input ciphertext in the exponent of a polynomial.

Indeed, the computational complexity of a bootstrap according to an embodiment is not exponentially dependent on the message precision. Even stronger, in an embodiment the bootstrap's computational complexity is independent of the message precision.

As a consequence, it is practically impossible to bootstrap ciphertexts encrypting a large message precision, especially using a usual TFHE-like scheme cryptographic parameters, e.g., 10 bits of message assuming common parameters such as *pₑᵣᵣ* ≤ 2⁻⁴⁰, *q* ≤ 2⁶⁴ and *N* ≤ 2¹⁷. Accordingly, using a bootstrap according to an embodiment, allows bootstrapping larger message precisions more efficiently. Being able to encode more message in a single ciphertext means that input and intermediate data does not need to be distributed over as many ciphertexts. Accordingly, fewer computational steps are needed to perform a desired computation.

Note this can use any encoding approach, e.g., like the ones described in [1]. For example, the message space does not need to divide the ciphertext modulus. Any multi-ciphertext representations may be used, e.g., Radix or CRT decompositions, may be used. In particular, an encoding may be used that allows parallel execution of the PBS. If such a parallelizable bootstrap is used, an embodiment also becomes parallelizable.

In an embodiment, the bootstrap may be adapted to the desired noise reduction. For example, an embodiment may be iteratively called to reduce the noise to a variable amount. This offers more flexibility and could reduce the computational time depending on the use-case. For example, in a place in the algorithm where the noise is expected to be large, more noise may be reduced, while in a place in the algorithm where the noise is expected to be small, fewer noise may be removed. In an iterable embodiment, more iterations may be done in the first case, while fewer iterations in the latter case. As a result the overall execution time decreases. If the noise level of the input cipher text is very low, the output ciphertext may not have a reduced noise level, or may even have an increased noise level. Nevertheless, the algorithms work in that they keep noise under a noise level and retain message integrity.

The conventional PBS in TFHE-like schemes, e.g., assuming that *q* = 2*^{k}* and *p* = 2*^{k}*' for some $k ∈ ℕ$ and $k ′ ∈ ℕ$, either uses a padding bit in the message space, or evaluates multiple PBS. A bootstrap according to an embodiment does not need this.

Since the noise reduction and the evaluation of LUTs can now be separated, a bootstrap according to an embodiment allows users to manage homomorphic operations more efficiently. This will have an important impact on any use-cases requiring large precision, like the homomorphic neural network inference.

The system for reducing an error in a homomorphic ciphertext comprise one or more electronic devices, e.g., one or more computers. The method for reducing an error term is typically computer implemented.

Devices and/or systems for homomorphic encryption, homomorphic computations and/or bootstrappings are electronic devices. The methods described herein may be applied in a wide range of practical applications. Examples include processing private data, e.g., medical data, financial data, etc., in a privacy-preserving way.

An aspect is a method for reducing an error term. An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

Another aspect of the presently disclosed subject matter is a method of making the computer program available for downloading.

The following references disclose homomorphic computation systems.
[1] Loris Bergerat, Anas Boudi, Quentin Bourgerie, Ilaria Chillotti, Damien Ligier, Jean-Baptiste Orfila, and Samuel Tap. Parameter optimization & larger precision for (t) fhe. Cryptology ePrint Archive, 2022.
[2] Charlotte Bonte, Ilia Iliashenko, Jeongeun Park, Hilder VL Pereira, and Nigel P Smart. Final: Faster fhe instantiated with ntru and Iwe. In Advances in Cryptology-ASIACRYPT 2022: 28th International Conference on the Theory and Application of Cryptology and Information Security, Taipei, Taiwan, December 5-9, 2022, Proceedings, Part II, pages 188-215. Springer, 2023.
[3] Zvika Brakerski, Craig Gentry, and Vinod Vaikuntanathan. (leveled) fully homomorphic encryption without bootstrapping. In Innovations in Theoretical Computer Science 2012, Cambridge, MA, USA, January 8-10, 2012, pages 309-325, 2012.
[4] Sergiu Carpov, Malika Izabachène, and Victor Mollimard. New techniques for multi-value input homomorphic evaluation and applications. In Cryptographers' Track at the RSA Conference, pages 106-126. Springer, 2019.
[5] Jung Hee Cheon, Andrey Kim, Miran Kim, and Yong Soo Song. Homomorphic encryption for arithmetic of approximate numbers. In Advances in Cryptology - ASIACRYPT 2017 - 23rd International Conference on the Theory and Applications of Cryptology and Information Security, Hong Kong, China, December 3-7, 2017, Proceedings, Part I, pages 409-437, 2017.
[6] Ilaria Chillotti, Nicolas Gama, Mariya Georgieva, and Malika Izabachène. Faster fully homomorphic encryption: Bootstrapping in less than 0.1 seconds. In Advances in Cryptology - ASIACRYPT 2016 - 22nd International Conference on the Theory and Application of Cryptology and Information Security, Hanoi, Vietnam, December 4-8, 2016, Proceedings, Part I, pages 3-33, 2016.
[7] Ilaria Chillotti, Nicolas Gama, Mariya Georgieva, and Malika Izabachène. Faster packed homomorphic operations and efficient circuit bootstrapping for TFHE. In Advances in Cryptology - ASIACRYPT 2017 - 23rd International Conference on the Theory and Applications of Cryptology and Information Security, Hong Kong, China, December 3-7, 2017, Proceedings, Part I, pages 377-408, 2017.
[8] Ilaria Chillotti, Nicolas Gama, Mariya Georgieva, and Malika Izabachène. TFHE: fast fully homomorphic encryption over the torus. J. Cryptol., 33(1):34-91, 2020.
[9] Ilaria Chillotti, Damien Ligier, Jean-Baptiste Orfila, and Samuel Tap. Improved Programmable Bootstrapping with Larger Precision and Efficient Arithmetic Circuits for TFHE. In Mehdi Tibouchi and Huaxiong Wang, editors, Advances in Cryptology - ASIACRYPT 2021, pages 670-699, Cham, 2021. Springer International Publishing.
   [9a] Ilaria Chillotti, Marc Joye, Damien Ligier, Jean-Baptiste Orfila, Samuel Tap. CONCRETE: Concrete Operates oN Ciphertexts Rapidly by Extending TfhE. In n M. Brenner and T. Lepoint, editors, Proceedings of the 8th Workshop on Encrypted Computing & Applied Homomorphic Cryptography - WAHC 2020, pages 57-63, Leibniz Universität IT Services, 2020.
[10] Léo Ducas and Daniele Micciancio. FHEW: bootstrapping homomorphic encryption in less than a second. In Advances in Cryptology - EUROCRYPT 2015 - 34th Annual International Conference on the Theory and Applications of Cryptographic Techniques, Sofia, Bulgaria, April 26-30, 2015, Proceedings, Part I, pages 617-640, 2015.
[11] Léo Ducas and Daniele Micciancio. FHEW: a fully homomorphic encryption library, 2017.
[12] Craig Gentry, Amit Sahai, and Brent Waters. Homomorphic encryption from learning with errors: Conceptually-simpler, asymptotically-faster, attribute-based. IACR Cryptology ePrint Archive, 2013:340, 2013.
[13] Craig Gentry. Fully homomorphic encryption using ideal lattices. In Proceedings of the 41st Annual ACM Symposium on Theory of Computing, STOC 2009, Bethesda, MD, USA, May 31 - June 2, 2009, pages 169-178, 2009.
[14] Antonio Guimarães, Edson Borin, and Diego F. Aranha. Revisiting the functional bootstrap in TFHE. IACR Trans. Cryptogr. Hardw. Embed. Syst., 2021(2):229-253, 2021.
[15] Jeffrey Hoffstein, Jill Pipher, and Joseph H Silverman. Ntru: A ring-based public key cryptosystem. In Algorithmic Number Theory: Third International Symposiun, ANTS-III Portland, Oregon, USA, June 21-25, 1998 Proceedings, pages 267-288. Springer, 2006.
[16] Andrey Kim, Maxim Deryabin, Jieun Eom, Rakyong Choi, Yongwoo Lee, Whan Ghang, and Donghoon Yoo. General bootstrapping approach for rlwe-based homomorphic encryption. Cryptology ePrint Archive, 2021.
[17] Zeyu Liu, Daniele Micciancio, and Yuriy Polyakov. Large-precision homomorphic sign evaluation using ffighew/tfhe bootstrapping. Cryptology ePrint Archive, Report 2021/1337, 2021. https://ia.cr/2021/1337.

### BRIEF DESCRIPTION OF DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,
Figure 1a schematically shows an example of an embodiment of a homomorphic computing system,
Figure 1b schematically shows an example of an embodiment of a homomorphic computing system and client,
Figure 1c schematically shows an example of an embodiment of a LWE encryption,
Figure 2a schematically shows an example of an embodiment of a homomorphic bootstrapping system,
Figure 2b schematically shows an example of an embodiment ciphertexts
Figure 3a schematically shows an example of an embodiment of a homomorphic bootstrapping system,
Figure 3b schematically shows an example of an embodiment ciphertexts
Figure 4 schematically shows an example of an embodiment of a homomorphic bootstrapping system,
Figure 5 schematically shows an example of an embodiment of a homomorphic bootstrapping system,
Figure 6 schematically shows an example of an embodiment of a method for reducing an error term in a ciphertext,
Figure 7a schematically shows a computer readable medium having a writable part comprising a computer program according to an embodiment,
Figure 7b schematically shows a representation of a processor system according to an embodiment.

### Reference signs list

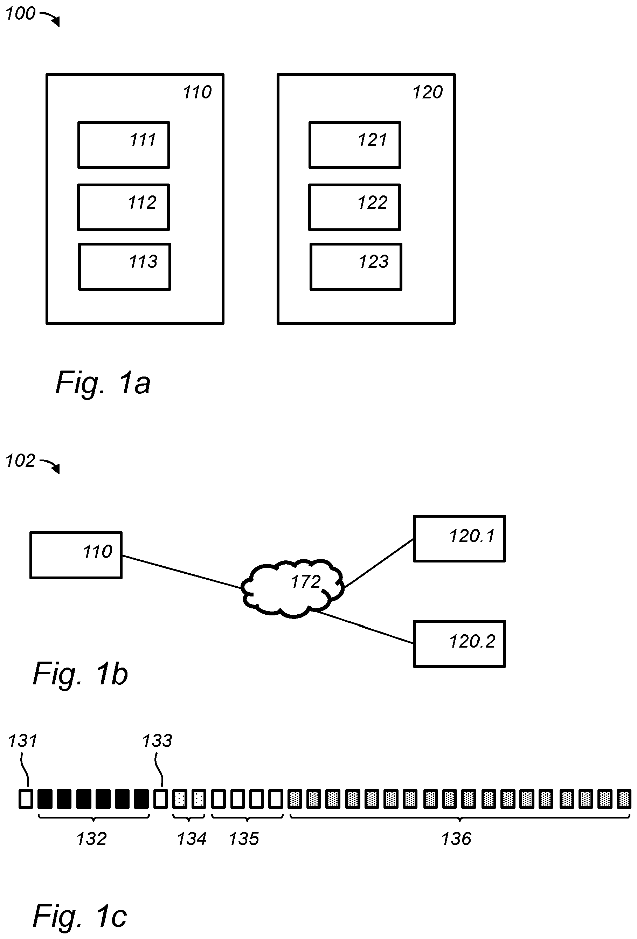

The following list of references and abbreviations corresponds to figures 1-5, 7a, and 7b and is provided for facilitating the interpretation of the drawings and shall not be construed as limiting the claims.
- 110: a homomorphic computing system
- 120, 120.1, 120.2: a client device
- 100, 102: a computing system
- 111, 121: a processor system
- 112, 122: storage
- 113, 123: communication interface
- 172: a data network
- 131: padding bit
- 132: message
- 133: padding bit between message and noise
- 134: additional padding bits
- 135: unused noise bits
- 136: used noise bits
- 200, 300, 400, 500: a bootstrapping system
- 201, 301, 401, 501: an input ciphertext
- 202, 302, 402, 502: an output ciphertext
- 211, 411: a first ciphertext
- 212, 312, 412, 512: a second ciphertext
- 213, 313, 413, 513: a third ciphertext
- 214, 414: a fourth ciphertext
- 220: message term removal
- 271-274: homomorphic processing
- 281: a most significant bit
- 282: a padding bit
- 283: a message term
- 284: an error term
- 285: additional noise
- 320, 420, 521: a shift left
- 522: a shift right
- 330, 530: a keyswitch
- 431: a first keyswitch
- 432: a second keyswitch
- 440: a rounding
- 250, 350, 450, 550: a programmable bootstrap
- 260, 360, 460: a subtraction
- 561: a first subtraction
- 562: a second subtraction

- 1000, 1001: a computer readable medium
- 1010: a writable part
- 1020: a computer program
- 1110: integrated circuit(s)
- 1120: a processing unit
- 1122: a memory
- 1124: a dedicated integrated circuit
- 1126: a communication element
- 1130: an interconnect
- 1140: a processor system

### DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

### Fully Homomorphic Encryption (FHE)

Fully Homomorphic Encryption is a family of encryption schemes that allow performing computations over encrypted data. FHE schemes use noisy ciphertexts for security reasons, e.g., ciphertexts containing some randomness. This noise grows after every performed homomorphic operation, and, if not controlled, it can compromise the message and prevent the user from decrypting correctly. A technique called Bootstrapping, e.g., from [13], allows reducing the noise when it has grown, by mean of a public key called *bootstrapping key.* By using bootstrapping frequently, thus reducing noise when needed, one can perform as many homomorphic operations as she wants, but it remains an expensive technique, both in terms of execution time and memory usage.

The noise of a freshly encrypted ciphertext is a small random value drawn from a given distribution *χ*(*σ*) parametrized by some parameter *σ* and added to the message during the encryption. Whenever we perform operations over ciphertexts, the randomness inside them will be modified as a side effect.

The link between the input noise and the output noise of an operation is modeled by what we call a noise formula, e.g., a formula describing the evolution of noise during the computation of this operation.

For a GLWE ciphertext, the distribution *χ* may be a centered discrete normal distribution, wherein *σ* is a standard deviation. During operations over ciphertexts, the distribution of the noise inside a ciphertext changes. Typically, when we say that a sample contains more noise than another, we mean that the noise inside the ciphertext is drawn from a normal distribution with a larger standard deviation. However, in embodiments, the noise could be drawn from another type of distribution.

The scheme TFHE [6, 7] differentiates from the other FHE schemes thanks to its supports of a efficient bootstrapping technique. TFHE was originally proposed as an improvement of the scheme FHEW [10], a GSW [12] based construction proposing a fast bootstrapping for the evaluation of Boolean gates. Apart from improving the FHEW bootstrapping, TFHE also implements additional techniques in order to support more functionalities than the ones proposed by FHEW and to improve homomorphic evaluation of complex circuits. TFHE is further described in ([6, 7, 8, 4]).

Apart from being very efficient, the bootstrapping of TFHE is also *programmable,* meaning that a univariate function can be evaluated at the same time as the noise is being reduced. It is often called Programmable bootstrapping and denoted as PBS.

A PBS may comprise a modulus switching (MS), Blind rotation (BR), and Sample extraction (SE). In some embodiments, the modulus switching may be taken out of the PBS and incorporated into the rest of the bootstrapping process.

For some well-generated parameters, TFHE PBS outputs a ciphertext with an amount of noise independent of the input ciphertext noise. The algorithms described in what follows, need some parameters to be set. The skilled person will be able to empirically decide these. Experiments were conducted wherein the LWE dimension (*n*) took a wide range of values: from 400 (small precision) to 2048 (big precision ≈ 20 bits). The polynomial size (*N*) took power-of-two values between 2⁸ and 2¹⁷. The GLWE dimension (*k*) was between 1 and 6. The decomposition log base ( 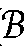 ) and the level (*ℓ*) have values were between 1 and 64, more generally, the logarithm of the ciphertext modulus. Parameters outside these ranges are possible.

In the paper [2], the authors define an alternative manner to compute a PBS based on the NTRU encryption scheme (see [15] for instance). All operations from the original TFHE scheme have been redefined to support the PBS. In what follows, this alternative PBS could be used in place of/in combination with the PBS for TFHE-like schemes.

Some of the algorithms herein may use a rounding operation. Although different rounding operations may be used, the following Round algorithm may be applied.

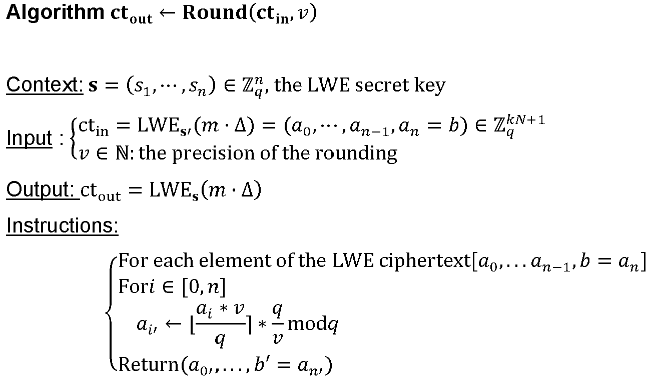

### Probability and Distribution

Let *A* 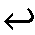 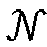 (*µ, σ*²),*pₑᵣᵣ* an error probability and Φ, CDF of *A.* We define the standard score for *pₑᵣᵣ* as $z * \left({p}_{err}\right) = {Φ}^{- 1} \left(1-\frac{{p}_{err}}{2}\right)$

We have $ℙ \left(A∉\left[μ-z*σ,μ+z*σ\right]<{p}_{err}\right.$

For a Centered Normal Distribution the Confidence Interval may be computed. Let *A* 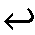 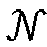 (*µ, σ*²) and $t ∈ ℝ$ and *pₑᵣᵣ* ∈ [0,1]. Let *z**(*pₑᵣᵣ*), the standard score for *pₑᵣᵣ,* we have $z * \left({p}_{err}\right) σ < t ⇒ ℙ \left(A∉\left[-t,t\right]<{p}_{err}\right.$

**Figure 1a** schematically shows an example of an embodiment of a homomorphic computing system 110 and of an embodiment of a client device 120. Homomorphic computing system 110 and client device 120 may be part of a computing system 100.

The client device 120 is configured to encrypt data according to a cryptographic homomorphic encryption scheme. The encrypted data is sent to homomorphic computing system 110. Computation system 110 is configured to perform homomorphic calculations on encrypted data, e.g., a series of computation steps comprising, e.g., one or more multiplications, additions, and the like. Homomorphic computing system 110 is configured to do this in a homomorphic way, without decrypting the data, or otherwise gaining knowledge about the plaintext input or output.

For example, one or more client devices 120 encrypt data, e.g., numerical data, and send the resulting encrypted data to computation system 110. Computation system 110 performs a calculation, e.g., an algorithm, e.g., evaluates a neural network on the encrypted data. Note that computation system 110 is not provided with a decryption key for decrypting the encrypted data. Computation system 110 may be provided with so-called public evaluation keys; including bootstrapping keys or key-switching keys, though. Such auxiliary key material may be used by computation system 110 to perform its computations. However, the auxiliary key material does not allow computation system 110 to decrypt ciphertexts. The outcome of the calculation may be provided, e.g., to client device 120, and may be decrypted there. The homomorphic calculations may use a system such as described in the background.

Client device 120 computes one or more encrypted messages. The encrypted message comprises a message part and an error part. Homomorphic computing system 110 performs computations on the encrypted messages. Doing so increases the size of the error part in the encrypted messages. A bootstrap operation reduces the size of the error part without revealing the message part. The message part could be changed if the bootstrap operation is programmable.

Homomorphic computing system 110 uses a fully homomorphic cryptographic scheme. The scheme supports at least a homomorphic addition and a programmable bootstrap. Ciphertext in such a system comprises a message term (*m̃*), and an error term. The error term avoids that the message term could be recovered by linear algebra based attacks. As the error typically grows as a result of performing homomorphic calculations, an operation is desirable to reduce the error term-this is called a bootstrapping. Conventional bootstrapping operations are so-called programmable bootstraps. The programmable bootstrap takes as input a ciphertext with a message term *m* and an error term e, and produces a ciphertext with a message term *f*(*m*) and an error term *e'.* The function *f* can be chosen arbitrarily, hence the name programmable bootstrap. The error term *e'* is smaller than a predefined bound, typically smaller than the input error term *e.* An error in a homomorphic ciphertext is also referred to as noise.

A bootstrap operation according to an embodiment uses a conventional programmable bootstrap, but cleverly boosts its efficiency, thus greatly increasing the size of the message term that can be supported.

For example, the homomorphic computing system 110 may perform one or more computations, then when the noise is in danger of becoming too great, apply a bootstrapping operation, followed by one or more further computations, and so on. If desired some of the bootstrapping may be a conventional programmable bootstrapping, but at least one, preferably, most, more preferably all, of the bootstrapping operations are according to an embodiment.

Homomorphic computing system 110 may comprise a processor system 111, a storage 112, and a communication interface 113. Client device 120 may comprise a processor system 121, a storage 122, and a communication interface 123. Storage 112 and 122 may be, e.g., electronic storage, magnetic storage, etc. The storage may comprise local storage, e.g., a local hard drive or electronic memory. Storage 112 and 122 may comprise non-local storage, e.g., cloud storage. In the latter case, storage 112 and 122 may comprise a storage interface to the non-local storage. Storage may comprise multiple discrete sub-storages together making up storage 112, 122. Storage may comprise a volatile writable part, say a RAM, a non-volatile writable part, e.g., Flash, a non-volatile non-writable part, e.g., ROM.

In the various embodiments of communication interfaces 113, and/or 123, the communication interfaces may be selected from various alternatives. For example, the interface may be a network interface to a local or wide area network, e.g., the Internet, a storage interface to an internal or external data storage, an application interface (API), etc.

Storage 112 and 122 may be non-transitory storage. For example, storage 112 and 122 may store data in the presence of power such as a volatile memory device, e.g., a Random Access Memory (RAM). For example, storage 112 and 122 may store data in the presence of power as well as outside the presence of power such as a non-volatile memory device, e.g., Flash memory.

Devices 110 and 120 may communicate internally, with each other, with other devices, external storage, input devices, output devices, and/or one or more sensors over a computer network. The computer network may be an internet, an intranet, a LAN, a WLAN, etc. The computer network may be the Internet. The devices 110 and 120 comprise a connection interface which is arranged to communicate within computing system 100 or outside of computing system 100 as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna.

The communication interface 123 may be used to send or receive digital data, e.g., encrypted sensor data, image data, audio data, and the like. The communication interface 113 may be used to send or receive digital data, e.g., computation results, e.g., classification data, technical control data, and the like.

Computation system 110 may be implemented in a single device, e.g., a server, a computer, etc. Computation system 110 may be implemented in multiple cooperating devices, e.g., a cloud computation system, etc. The communication interface 113 may be used to communicate with other computation devices, e.g., computation devices in the same system. Homomorphic computation is very resource intensive, and thus it is advantageous to be able to spread the load across multiple devices if needed.

Client device 120 may have a user interface, which may include well-known elements such as one or more buttons, a keyboard, display, touch screen, etc. The user interface may be arranged for accommodating user interaction. For example, user interaction may be to initiate a homomorphic computation on client device 120, for execution on computation system 110.

The execution of devices 110 and 120 may be implemented in a processor system. The devices 110 and 120 may comprise functional units to implement aspects of embodiments. The functional units may be part of the processor system. For example, functional units shown herein may be wholly or partially implemented in computer instructions that are stored in a storage of the device and executable by the processor system.

The processor system may comprise one or more processor circuits, e.g., microprocessors, CPUs, GPUs, etc. Devices 110 and 120 may comprise multiple processors. A processor circuit may be implemented in a distributed fashion, e.g., as multiple sub-processor circuits. For example, devices 110 and 120 may use cloud computing.

Typically, the homomorphic computing system 110 and client device 120 each comprise a microprocessor which executes appropriate software stored at the device; for example, that software may have been downloaded and/or stored in a corresponding memory, e.g., a volatile memory such as RAM or a non-volatile memory such as Flash.

Instead of using software to implement a function, the devices 110 and/or 120 may, in whole or in part, be implemented in programmable logic, e.g., as field-programmable gate array (FPGA). The devices may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, homomorphic computing system 110 and client device 120 may comprise circuits, e.g., for cryptographic processing, and/or arithmetic processing.

In hybrid embodiments, functional units are implemented partially in hardware, e.g., as coprocessors, e.g., cryptographic coprocessors, and partially in software stored and executed on the device.

**Figure 1b** schematically shows an example of an embodiment of computation system 102. Computing system 102 may comprise multiple client devices; shown are client device 120.1 and 120.2 Computing system 102 may comprise multiple computation devices; shown is one computation device 110. The devices are connected through a computer network 172, e.g., the Internet. The client devices and homomorphic computing devices may be according to an embodiment.

A ciphertext could represent various types of data. Below is a list of examples for using a homomorphic computation system. In these examples a client device 120 is used to encrypt data before sending it to a homomorphic calculator, e.g., such as homomorphic computing system 110. Encryption may be used, e.g., in one of the following scenarios:
Healthcare applications: patient data may be encrypted with an embodiment of client device 120. Homomorphic calculation can be used to perform medical research on the encrypted data without compromising patient privacy. This could include analyzing genomic data or conducting clinical trials. For example, a homomorphic calculation may be performed on medical data, e.g., medical sensor data, e.g., a medical image. The medical data may comprise genomic data.

Cloud computing: The encryption may be used to securely outsource computation to untrusted cloud providers. Computations may be performed on encrypted data stored in the cloud, without ever having to decrypt the data.

Machine learning: The encryption may be used to perform machine learning computations on encrypted data. This could include training models on encrypted data or making predictions on encrypted data without ever decrypting it. For example, a neural network may be trained and/or evaluated on encrypted data.

Blockchains: The encryption may be used to hide data appearing on a public blockchain. This could include private data like a user's account balance. Using encryption would enable wiring money by checking on encrypted data that the user's balance is sufficient for the transfer. Doing so would hide the exact balance of the user.

Internet of Things (loT) applications: The encryption may be used to securely process sensor data in real-time, without exposing the data to third parties. For example, a smart city could use homomorphic encryption to perform calculations on encrypted sensor data to improve traffic flow or reduce energy consumption.

In this section, we give an example on how to compute a noise bound from a precision, a given encoding and some error probability. We call noise bound a threshold related to the noise inside a ciphertext. It is written *t*(·) and is often parametrized by a probability, but note that it could be something else. For security reasons, the exact noise value has to be secret, however the variance of its distribution is publicly known. The noise bound represents a limit that we do not want to cross in terms of variance of the error in the ciphertexts. This noise bound is related to several metadata such as the number of bits to represent the message or the probability of being correct.

For example, in an embodiment, a message *m* on a given number of bit *p,* may be encrypted in one ciphertext in the most significant bits. An LWE ciphertext is a tuple (*a*₁, ··· , *aₙ*, *b*) with $b = {\sum }_{i = 1}^{k} {a}_{i} ⋅ {s}_{i} + e + Δ m$ such that
- $\left({s}_{1}, ⋯, {s}_{k}\right) ∈ {ℤ}_{q}^{k}$ is the secret key with coefficients either sampled from a uniform binary, uniform ternary or Gaussian distribution,
- ${\left\{{a}_{i}\right\}}_{i = 1}^{k}$ are integers in ${ℤ}_{q}$ sampled from the uniform distribution in $ℤ / qℤ$,
- *e* is the error sampled from a centered Gaussian distribution *χ_{σ},*
- Δ*m* is the message re-scaled in the Most Significant Bits.

The noise term *e* is sampled from a Gaussian distribution and we want to find a threshold on its variance so that if the noise remains below this threshold, the computation will happen correctly up to a given probability *pₑᵣᵣ.*

**Figure 1c** gives a schematic visual representation of the binary representation of Δ*m* + *e* (MSB on the left ; LSB on the right).

The figure shows 32 bits in the form of rectangles, corresponding to a ciphertext modulus *q* = 2³², in this example. Another commonly used value in TFHE is *q* = 2⁶⁴; other moduli are possible as well.

For the standard score, we use here *z**(*pₑᵣᵣ*) = 4, e.g., *pₑᵣᵣ* ≈ 2^{-13.9}; this corresponds to the two shaded rectangles 134.

The precision of the message, *p,* e.g., the number of bits to encode the integer message *m,* is in this example *p* = 6.

Accordingly, we can compute the noise bound as $t \left(p\right) = \frac{q}{{2}^{1 + p + 1}} ⋅ \frac{1}{{2}^{2}}$

Which in this example, equals 2²². In the exponent 1 *+ p* + 1, the first 1 refers to the MSB padding bit 131; p to the number of bits needed for the message 132; the second 1 to the padding bit 133 between message and noise, so the noise does not contaminate the message during rounding at decryption time. The final exponent in 2 in the second fraction refers to the standard score for a given probability of failure. These are additional padding bits 134.

Noise may be present in noise bits 135 and 136. In this example, noise is shown in bits 136. In the example, four more bits 135 are available for the noise to grow. Performing a bootstrap would increase the number of bits 135 and decrease the number of bits 136.

In this case, the MSB is set to a known value as is conventional due to restriction of the TFHE's PBS. The known value could be 0 or 1, as long as it is known. Note that a bootstrapping according to an embodiment is not limited to this. This means that an additional bit may be used for the message, without having the increase the modulus size.

As seen in the previous above, the security of fully homomorphic encryption schemes, including the TFHE-like ones, relies on the noise. Ciphertexts contain a small amount of noise, which acts as a small randomness added during the encryption process. All along operations, this noise will grow. In the case where it becomes too large, it may overwrite the message part and endanger the correctness of the scheme. To avoid this, the idea is to use a bootstrapping, e.g., an operator dedicated to the noise reduction. To correctly operate, this relies on a public material, called the bootstrapping key. The main idea behind a bootstrapping is to homomorphically apply the decryption circuit on the input ciphertext. This allows reducing the error without requiring to publicly reveal the secret key. TFHE-like schemes have a fast bootstrapping operation that allows doing so quite efficiently. One of the interesting aspects of the TFHE family is the possibility to compute a function while reducing the error, without increasing the cost of the noise reduction. The bootstrapping is therefore called a Programmable Bootstrapping, abbreviated PBS.

However, there is one big drawback of this method: the computational complexity is exponential in the number of bits used to represent the message (called the precision of a message). As shown in [1], there exists no TFHE-like parameter set ensuring 128 bits of security, with an error probability smaller than 2⁻⁴⁰ to compute a PBS over a message precision greater than 11 bits.

As initially defined in [8], another constraint of the PBS for TFHE-like schemes is the need of a padding bit in the message space. Put in other words, only half of the theoretically available message can be practically used to correctly compute a PBS. As seen in the state-of-the-art, there exists some solutions (e.g., [1, 9, 17]) to overcome this problem, but these involve computing several PBS. Moreover, such solution cannot be used to extend the message space further than 1 bit.

In embodiments, a new bootstrap is presented, for which the cost of a bootstrapping does not depend on the message precision. Instead, the computational cost depends on the noise precision, e.g., the chosen number of bits of noise to remove from the input ciphertext. Therefore, using a bootstrapping according to an embodiment, this offers the possibility to reduce the noise over messages having large precision (e.g., having at least 8, 16, or 25 bits) for a fraction of the cost of TFHE's bootstrapping. Note that the new bootstrap is dedicated to the noise reduction and is not programmable. However, it is compatible with the classical PBS. In the end, this new bootstrapping suggests new strategies to compute homomorphic circuits more efficiently since it is decorrelated from the computation of functions and the message precision.

Embodiments present a completely different approach for managing the noise in fully homomorphic encryption, such as in the TFHE context.

In an embodiment, a bootstrap extracts an error term from a ciphertext and then removes it from the ciphertext. This will work with smaller polynomials in the PBS than the conventional methods, in particular if precision of the message is above 4 bits, e.g., 5 bits or more.

Traditionally, in the TFHE context, to refresh the noise, a homomorphic decryption of the ciphertext is computed to obtain another encryption of the original message with less noise. In this invention, there are two steps instead, we generate a noisy encryption of the noise of the original ciphertext (step 1 called error extraction), but with less noise, and homomorphically remove it from the original ciphertext (step 2, a subtraction), hence reducing the amount of noise while preserving the same message.

If the parameters are chosen correctly, this method will reduce the noise inside the input ciphertext and thus is an actual bootstrapping operation as it reduces the noise only using public materials.

The bigger the precision of the message in the ciphertext is, the better our method will scale compared to TFHE's original bootstrapping. Indeed, the cost of this new bootstrapping is no longer exponentially dependent on the message size. As a rule of thumb, whenever the message space is bigger than a rounding error, this method is more efficient than using TFHE's traditional PBS.

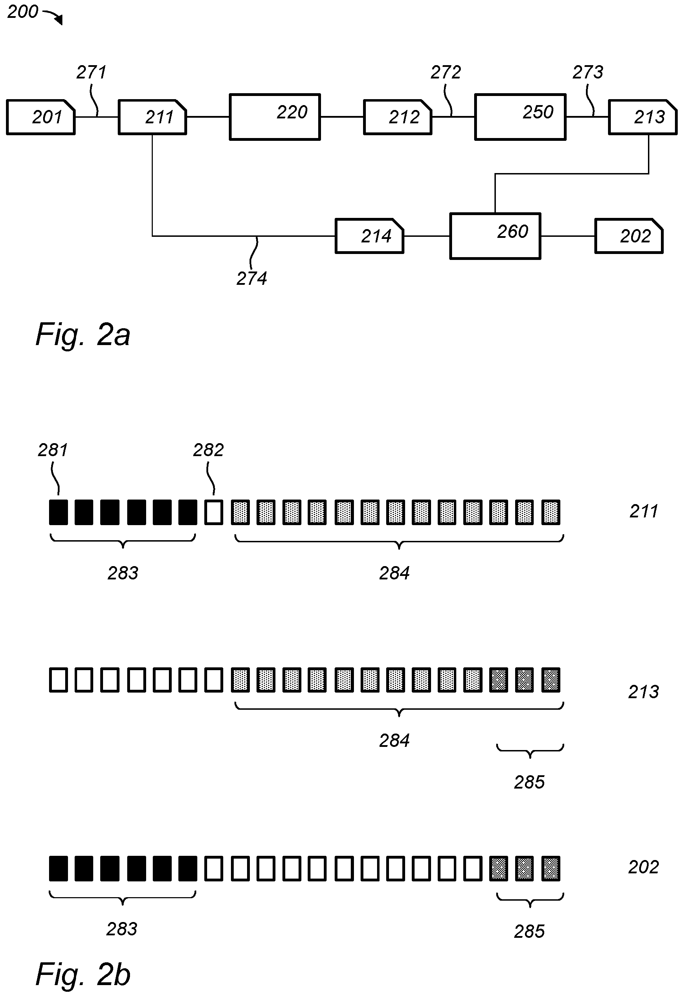

**Figure 2a** schematically shows an example of an embodiment of a homomorphic bootstrapping system 200. The bootstrapping could be included in a homomorphic computation system, e.g., such as computation system 110. The bootstrapping may be used with a fully homomorphic cryptographic scheme that supports at least a homomorphic addition and a programmable bootstrap. Examples of such schemes include TFHE-like schemes, e.g., LWE and GLWE encryption, NTRU encryption, and the like.

Generally speaking, homomorphic encryption of a message, e.g., of data, may comprise encoding the message *m* in a message term (*m̃*) and combining it with noise, e.g., an error term, typically by adding the noise. The result may be encrypted using a lattice-based encryption; For example, a lattice element may be added to the combination of message term and error term to encrypt the combination.

There are various ways to encode a message, e.g., by combining functions that cause the encoded message to be recoverable from the noise. One such possible function is to multiply a scalar representing the message. As the message moves to an upper position with respect to the noise, a rounding operation can remove most or all of the noise. Instead of multiplication with a multiplier, the encoding could be the application of a function that also causes the message scalars to move to the upper position, though not necessarily linearly. Preferably, the function is invertible, at least for the set of message scalars that are used. Another possibility is to encode the message together with an error correcting function. For example, the encoding may have the form *a*(*m*), and combining with the error term *e* may be *a*(*m*) *+ e.* For example, the encoding may have the form *a*(*b*(*m*)), wherein *b* is an error correcting coder, e.g., a BCH, Reed-Solomon, Hamming, etc., while *a* is an increasing function that maps the domain of *b*(*m*) to an upper position. For example, function *a* may comprise a multiplication with a multiplier, Δ, etc. For example, the function could be a polynomial, though it is not necessary to restrict to polynomials.

For simplicity, we will use for encoding the multiplication with a multiplier, Δ, so that *m̃* = Δ*m*. However, embodiments may be adapted to other types of encoding a message in a message term.

Figure 2a shows a general embodiment of reducing noise in a homomorphic system such as above. Shown in figure 2a is input ciphertext 201. The input ciphertext comprises a homomorphic encryption of a message term (*m̃*) and an error term. Typically, the input ciphertext is obtained as a result of homomorphic calculations performed on ciphertexts that were received from outside, e.g., from a client device.

For example, the homomorphic cryptographic scheme may support at least a homomorphic addition and a programmable bootstrap. The addition, and by implication the subtraction, may typically be performed directly on the elements in the ciphertext. The programmable bootstrap allows both to reduce noise, and to evaluate arbitrary functions. With these elements other calculations can be created. The homomorphic cryptographic scheme may support further operations.

As a consequence of homomorphic calculations, typically the error term increases. This is a problem, since, if the error term becomes greater than the message term, unique decryption may become impossible. As a result from time to time, a bootstrapping operation is needed to reduce the error term. Bootstrapping is resource intensive, reducing in conventional system severely the maximum size of the message *m* in the ciphertext.

Generally speaking system 200 homomorphically extracts an error term from a first ciphertext 211 into a third ciphertext 213. By subtracting the third ciphertext 213 from the first ciphertext 211, the error term is mostly removed yet the message term remains unchanged.

In effect a conventional bootstrapping operation is used more effectively by bootstrapping an error space instead of the message space. This circumvents many previous constraints, while still reducing the noise into the ciphertext.

This is illustrated in **Figure 2b****,** which schematically shows an example of an embodiment of ciphertexts. Shown in figure 2b are a combination of message term and error term, but without the encryption applied. For example, for an LWE encryption, (*aᵢ*, *b)* with key *sᵢ,* what is shown in figure 2b is *b* - Σ *aᵢ sᵢ.*

Shown in figure 2b is the first ciphertext 211. The first ciphertext may be equal to the input ciphertext 201, but it is possible to pre-process input ciphertext 201 to advantage to further increase the extent of error reduction.

Shown in ciphertexts 211 is a message term 283. In this case the message term is located in the most significant part of ciphertexts 211. Note that the most significant bit 281 of ciphertext 211 is used for the encoded message. Conventional programmable bootstrapping operations require this bit to be known, e.g., zero or one, but this is not required in an embodiment. An error term 284 is shown in a least significant part of the ciphertext. The error term and message term may be separated by one or more padding bits. Shown is one such padding bit 282. Having the message term in a more significant part than the error term, has the advantage that the message term can be removed by left shifting, which is a supported homomorphic operation. In an embodiment, encoding of a message and combination with noise may be organized differently, however.

System 200 creates a third ciphertext 213 that contains the error term of the first ciphertext 211, but not message term 283. Note that in the processing done to achieve this some additional noise may be introduced. This is shown as additional noise 285.

By subtracting third ciphertext 213 from the ciphertext 211 an output ciphertext 202 is obtained. In the output the error term has been reduced, or at least the output error term is below a predefined error level, e.g., expressed in a number of bits, a standard variation, an upper bound on the noise, etc. As shown only the additional noise is left that was introduced due to the homomorphic processing. Note, that it is not necessary that the error term 284 is fully removed, or even fully removed up to additional noise. A reduction of the error term in output 202 compared to input 201 is sufficient for the bootstrapping to be useful. Note that the bootstrapping may be repeated if further reductions are desired.

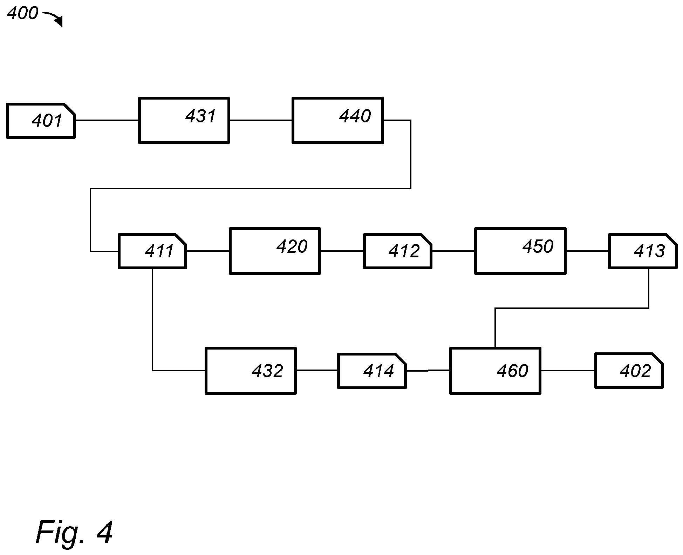

System 200 obtains that first ciphertext 211 from the input ciphertext 201. These ciphertexts may be the same. Alternatively some additional processing 271 may be done to derive the first ciphertext 211. For example, figure 4a shows an embodiment in which such pre-processing is done to advantage. First ciphertext 211 and input ciphertext 201 share the same message, e.g., the same message term, and may or may not have the same error term.

From the first ciphertext 211 the message term is removed, and the error term is extracted. This may be done by removing the message term in an operation 220. There are various ways to do this, e.g., shifting the message out, or zeroizing the message. This produces a second ciphertext 212. Second ciphertext 212 does not comprise the message, but may not yet be suited for further processing.

A conventional programmable bootstrapping 250 (PBS) is used to obtain from the second ciphertext 212 a regular ciphertext, e.g., third ciphertext 213. For example, third ciphertext 213 may be an encryption of zero having as error the extracted error term, or an approximation thereof, e.g., the extracted error term with additional noise. The error term in the first ciphertext 211 minus the extracted error term 213 with additional noise is smaller than a predefined noise level, and preferably smaller than the error term in the first ciphertext 211.

PBS 250 may well be a TFHE bootstrap, but this is not necessarily so. For example, one could use the NTRU bootstrap.

For example, removing a message by shifting left may be followed by shifting right in PBS 250. Note that shifting left is a homomorphic operation as it can be regarded as repeated additions, while shifting right is not necessarily so, but can be performed by a PBS. In this case, the error term in the second ciphertext 212 extends further to the left, that is towards the MSB, than the error term in the first ciphertext 211 does. For example, the error term may extend into the part of the ciphertext were normally the message part is. The third ciphertext 213 that is thus produced can be regarded as an encryption of zero, having the extracted error term at the expected place in the ciphertext.

Another option to remove a message is to zeroize the message term, which although possible, may introduce additional noise in the message part. In this case, the error term in the second ciphertext 212 is at the expected place in the ciphertext, but the message part may contain some random bits. The PBS 250 may remove these random bits. Again the resulting third ciphertext 213 is an encryption of zero with the error term of the first ciphertext.

Depending, e.g., on the pre-processing or message removal type done, there may be post-processing 273 done to obtain the third ciphertext 213 from the PBS output.

PBS 250 may for example be the TFHE programmable bootstrap, or the NTRU bootstrap. Other PBS's implementations may be used. An embodiment will show improvement over using the PBS directly on the input if the PBS has a super-polynomial time or space complexity in the message part's length.

Having the error term extracted from the first ciphertext 211, the error term can be subtracted 260 homomorphically from a fourth ciphertext 214 comprising the message term (*m̃*), the error term (*e*), and possibly additional noise. The fourth ciphertext 214 may be equal to the first ciphertext 211, but there may have been further processing 274.

One reason further processing may be used is to account for keyswitching. In homomorphic encryption scheme multiple keys may be used. For example, a larger first key, which may be a GLWE key, and a smaller second key which may be an LWE key. For example, the fourth ciphertext could be the first ciphertext, or processed, e.g., rounded ciphertext, possibly with one or more keyswitchings applied.

In detailed embodiments provided herein, the first key may have size *kN,* where N = polynomial size, and k = GLWE dimension, while the second key may be of size *n,* where *n* = LWE dimension. More generally though, the keyswitch can go from n' to n (and here n' > n). The output of a PBS operation may be of the larger, first key size. The PBS may output a ciphertext encrypted under a flattened GLWE key. For example, the GLWE key may have *k* polynomials of N coefficients, giving rise to a flattened GLWE key of *k* * *N* coefficients. Typically, the bootstrapping in the PBS is performed on a ciphertext encrypted with the small second key, while the result of the bootstrapping is typically in the first large key. The keyswitch to convert to the appropriate key may be incorporated in the PBS procedure, though the detailed embodiments described herein usually write out the keyswitch explicitly. There could be more than two keys, possibly of multiple sizes.

If it is assumed that input ciphertext 201 is encrypted under a first key of larger size, e.g., of size kN, e.g., because it is obtained as the output of a PBS, then at some point in the bootstrapping a keyswitch may be performed to go from the larger key size to the smaller key size. This could be done at various points, e.g., at processing 271, or 272. A keyswitch in the other direction may be done at 274 depending on where the keyswitches take place. Embodiments are included to illustrate various positions for keyswitches.

The secret key *s* takes binary, ternary, and/or gaussian values *sᵢ* in an embodiment. In an embodiment of a PBS the input to the PBS is according to a second key, while the output is according to a first key, wherein the first key is larger than the second key, e.g., having more elements.

An embodiment is suitable for message terms comprising a large number of bits. For example, in an embodiment, the message term comprises at least 5 message bits, preferably at least 6 message bits, preferably at least 8 message bits, preferably at least 10 message bits. A larger message size has the advantage that processing can be done on large message words, which is faster. A bootstrapping according to an embodiment may be applied to message terms that are smaller, e.g., having 4 bits, or 5 bits. This has the advantage that a bootstrapping according to an embodiment as well as a conventional PBS may be applied to ciphertexts.

Interestingly, conventional bootstrapping operations, including the PBS 250 break down when the number of message bits is too large. By removing the message in second ciphertext 212, the dependency of the PBS on the input is removed or at least significantly reduced. As a result this bottleneck that PBS 250 may have, does not apply to the whole bootstrapping operation.

A bootstrap according to an embodiment may provide various advantages. Conventional bootstraps have a computational complexity which is exponentially dependent on the message precision. In an embodiment, computational complexity is independent of the message precision. As consequence, it is practically impossible to bootstrap ciphertexts encrypting large message precision, e.g., using usual TFHE-like scheme cryptographic parameters, e.g., 10 bits assuming *pₑᵣᵣ* ≤ 2⁻⁴⁰, *q* ≤ 2⁶⁴ and *N* ≤ 2¹⁷. An embodiment allows bootstrapping larger plaintext precisions more efficiently. Note that an embodiment of bootstrap may be performed in parallel using any suitable encoding approach, e.g., like the ones described in [1]. The message space does not necessarily divide the ciphertext modulus, which is also compliant with any multi-ciphertext representations, e.g., Radix or CRT decompositions, also detailed in [1].

An embodiment can be iteratively called to reduce the noise to a variable value. This offers more flexibility and could reduce the computational time depending on the use-case.

In TFHE-like schemes, assuming that *q* = 2*^{k}* and *p =* 2*^{k}'* for some $k ∈ ℕ$ and $k ′ ∈ ℕ$ , either a padding bit in the message space is required or multiple PBS should be computed to avoid this constraint. In an embodiment, this assumption on the message space is removed, while no multiple PBS need to be computed.

The new bootstrap may be regarded as a more efficient way of applying a conventional bootstrap. For example, in an embodiment a method is provided for applying a programmable bootstrap in a fully homomorphic cryptographic scheme supporting at least a homomorphic addition and the programmable bootstrap. The method comprises
- obtaining an input ciphertext, the input ciphertext comprising a homomorphic encryption of a message term (*m̃*),
- homomorphically extracting the error term from a first ciphertext derived from the input ciphertext, the first ciphertext comprising a homomorphic encryption of a message term (*m̃*) and having an error term (*e*), obtaining a third ciphertext being a noisy homomorphic encryption of the error term and possibly additional noise, the extracting comprising
- obtaining a second ciphertext by removing the message term from the first ciphertext,
- applying the programmable bootstrap to the second ciphertext, obtaining therefrom the third ciphertext
- homomorphically subtracting the third ciphertext from a ciphertext comprising the message term (*m̃*), the error term (*e*), and possibly additional noise.

Below a number of detailed embodiments are provided, illustrating some of the various options that can be taken.

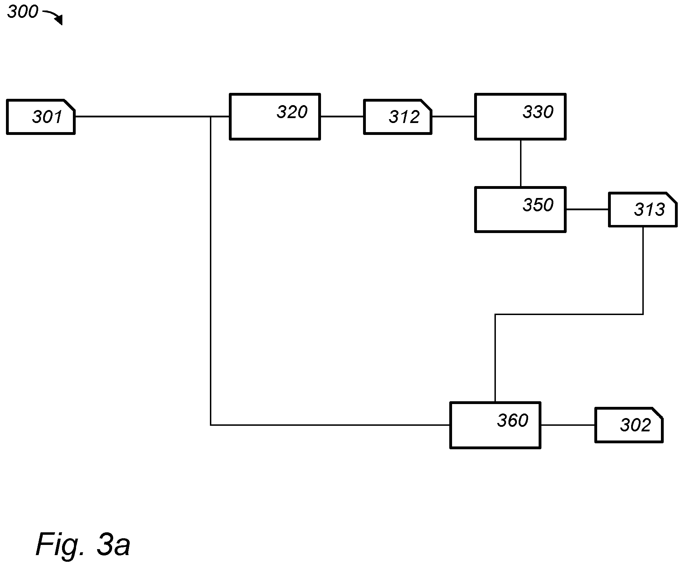

**Figure 3a** schematically shows an example of an embodiment of a homomorphic bootstrapping system 300. Shown in figure 3a is an input ciphertext 301. To remove the message term from the ciphertext, a shift left 320 is performed that shifts out a message term located in the most significant part of the input ciphertext. The output is second ciphertext 312. Note that a shift left operation, that is, a multiplication with a power of 2 is an operation that can be performed natively homomorphically. For example, to shift left by 1 bit, the number can be added to itself.

For example, given an LWE ciphertext (*aᵢ*, *b*), a shift left over *x* bits may be implemented as (2*^{x}aᵢ,* 2*^{x} b*), assuming the underlying modulus q is itself a power of two. If *q* is a power of another integer *p,* then the shift lift may be implemented as (*p^{x}aᵢ, p^{x} b*),

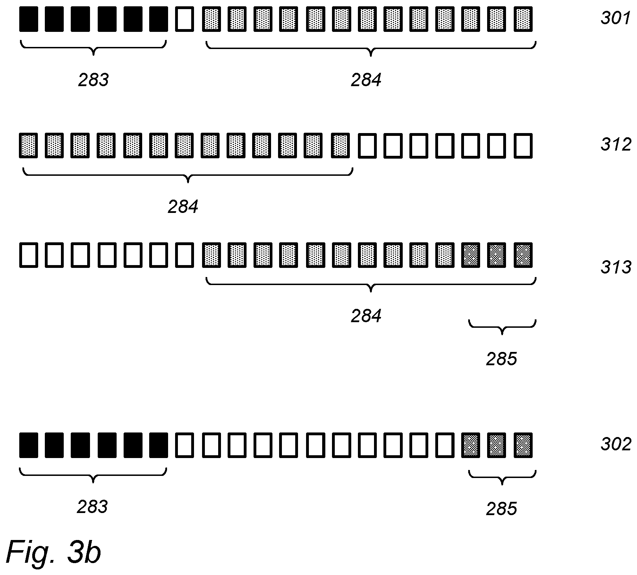

Figure 3b illustrates this operation. Shown in figure 3b is the input ciphertext 311, with message term 283 and error term 284. After shifting left to remove the message term 283, the second ciphertext 312 is obtained. Although figure 3b shows these ciphertexts without encrypting, e.g., without applying the mask, during bootstrapping all values related to the message are encrypted as the processing is done homomorphically.

The shift left results in a ciphertext with an error term that extends unusually far into the most significant part of the ciphertext. A PBS 350 is applied to shift the error term back to the same position it was in, in the input ciphertext. For example, PBS 350 may shift its input for as many bits to the right as message removal 320 shifted to the left. Interestingly, second ciphertext does not comprise a message term and so PBS 350 does not have a dependency on the message input size as bottleneck. PBS 350 may be designed for more or less accuracy, thus adding more or less additional noise. A less accurate PBS will reduce error by a smaller amount, but will also be smaller and faster and will need less public material to perform the operation.

Assuming the input ciphertext 301 is in the large first key, a keyswitching 330 may be performed at this point, just after the message removal 320 and just before the PBS 350. Keyswitching 330 switches the encryption from a large first key, e.g., of size *kN* to a small second key, e.g., of size *n.* The result of PBS 350 is third ciphertext 313. This is shown in figure 3b. Third ciphertext 313 now no longer contains the message term, but still has the error term 284. Note that shifting to the right of PBS 350 need not be perfect, additional noise 285 may be introduced. This is not a problem.

Finally, third ciphertext 313 may be subtracted 360 from input ciphertext 301; note that here the input ciphertext is the same as the first ciphertext. Figure 3b shows the result of this subtraction, the output ciphertext 302. The additional noise 285 shown in output 302, in figure 3b, need not be the same as the noise shown for third ciphertext 313.

In this case, the shifting left 320 of the input ciphertext causes an upper bound on the error term to start at the most significant bit. In general, the error term could be shifted to any desired position relative to the most significant bit, but nearer to the most significant bit allows for a larger noise term. For example, in an embodiment the error term could be shifted to the most significant bit, to the second most significant bit, or third most significant bit. Further removed from the most significant bit is also possible though. Note that it is not necessary to shift to the most significant bit, second most significant bit. One could also shift the error term to start at a later bit, say the 3rd or 4th bit.

Bootstrapping according to the embodiment of figure 3a is more efficient than a conventional PBS. Using a traditional programmable bootstrapping the message precision, e.g., in bits, constrains the polynomial size used inside the PBS. To add one more bit of precision, that is, to allow one additional message bit, you need to double the size of N. Accordingly working with larger messages, say, from 5 bits and more, becomes very costly. The algorithm of figure 3a scales much better with increasing precision.

**Figure 3b** shows a large reduction of the error term in output ciphertext 302, though in practice the system of figure 3a may be produce smaller error reductions. It is possible to repeat the bootstrapping of figure 3a several times to remove more noise in the ciphertext. A second or further iteration of the bootstrapping may be different than the first or earlier iteration. The reason is that after the first iteration the error term is smaller. Accordingly, the left shift may be over more bits, in order to bring the error term to the same position as in the earlier iteration, e.g., at the MSB bit. The PBS may likewise be adapted to move the error term further r to the right.

Below a detailed embodiment is described in line with figure 3a. It starts with a ciphertext in need of a noise refresh encrypted under the large key. If the ciphertext happens to be encrypted already with the small key, the algorithm may be correspondingly adapted. We will subtract from it a ciphertext encrypting an approximation of its most significant error bits: Figure 3a illustrates the process. To do so, we shift left the ciphertext to remove the message and put the error in the most significant part, keyswitch it to the small key, and compute an approximate PBS on the most significant part of the error with the identity look-up table (LUT) re-scaled to where the error was originally before the shift left. One can now subtract this PBS output to the original ciphertext and do it again if they need to bring lower the noise level. In a next iteration, the shift left will be further to the left due to the smaller amount of error in this ciphertext.

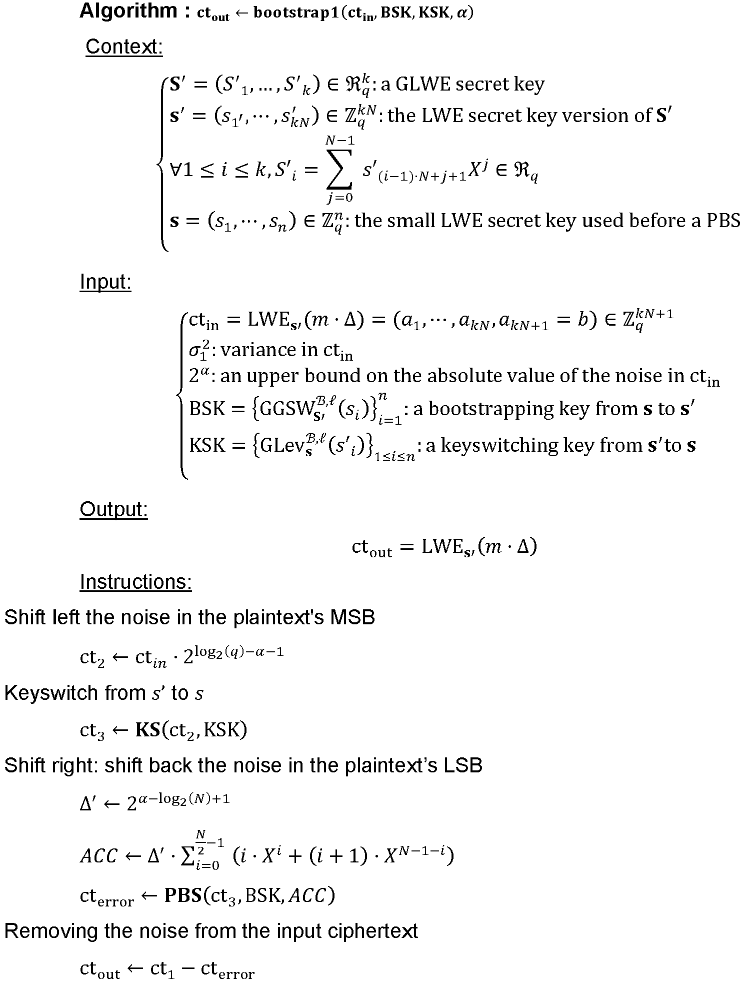

The algorithm assumes the noise to be coming from a normal distribution but it could be easily adapted to handle other noise distributions, e.g., uniform, binary, etc. The algorithms are described for q a power-of-two but the algorithms could be easily modified to deal with not-a-power-of-two ciphertext modulus. GGSW and GLev are further defined, e.g., in the paper "Improved Programmable Bootstrapping with Larger Precision and Efficient Arithmetic Circuits for TFHE", by Ilaria Chillotti, Damien Ligier, Jean-Baptiste Orfila, Samuel Tap, available as Paper 2021/729 on the Cryptology ePrint archive, in particular page 7 thereof.

Below a noise analysis of the algorithm is presented.

We have $\left|Err\left({ct}_{1}\right)\right| \leq {2}^{α}$ ${e}_{KS} ⋅ \frac{N}{q} < \frac{1}{2}$

Classic requirement on the noise in ctₒᵤₜ to be decryptable, e.g., $Err \left({ct}_{out}\right) < \frac{Δ}{2}$

By hypothesis, we have ${e}_{KS} ⋅ \frac{N}{q} < \frac{1}{2}$

Let *e*ᵢₙ such that *e*ᵢₙ = Err(ctᵢₙ) with |*e*ᵢₙ| *<* 2*^{α}* Let $\overline{e} = {e}_{in} ⋅ \frac{N}{{2}^{α + 1}}$ and ${Δ}_{r} = \frac{{2}^{α + 1}}{N}$ and *e = e*ᵢₙ *- e̅* · Δ*ᵣ.* Let us study |*e*|, we have $\begin{matrix}\left|{e}_{_}\right| & = \left|{e}_{in}⋅\overline{e}⋅{Δ}_{r}\right| \\ & = \left|{e}_{in}-{e}_{in}⋅\frac{N}{{2}^{α + 1}}⋅\frac{{2}^{α + 1}}{N}\right| \\ & \leq \left|{e}_{in}-{e}_{in}-\frac{{2}^{α + 1}}{2 ⋅ N}\right| = \frac{{2}^{α}}{N}\end{matrix}$

Let us compute the phase *ϕ* of each ciphertexts: ct₂ and ct₃. We have $ϕ \left({ct}_{2}\right) = \left(\overline{e}⋅{Δ}_{r}+{e}_{_}\right) ⋅ {2}^{{log}_{2} \left(q\right) - α - 1}$ and $ϕ \left({ct}_{3}\right) = \left(\overline{e}⋅{Δ}_{r}+{e}_{_}\right) ⋅ {2}^{{log}_{2} \left(q\right) - α - 1} + {e}_{KS}$ then $ϕ \left({ct}_{MS}\right) = \left(\overline{e}⋅{Δ}_{r}+{e}_{_}\right) ⋅ {2}^{{log}_{2} \left(q\right) - α - 1} + {e}_{KS} + {e}_{MS}$

After the approximate bootstrap, we have $ϕ \left({ct}_{error}\right) = {2}^{α + 1 - {log}_{2} q} \frac{\left(\overline{e}⋅{Δ}_{r}+{e}_{_}\right) ⋅ {2}^{{log}_{2} \left(q\right) - α - 1} + {e}_{KS} + {e}_{MS}}{q} ⋅ N ⋅ \frac{q}{N} + {e}_{BR}$

Notice that ${Δ}_{r} ⋅ {2}^{{log}_{2} \left(q\right) - α - 1} = \frac{{2}^{α + 1}}{N} ⋅ {2}^{{log}_{2} \left(q\right) - α - 1} = \frac{q}{N}$ and that $\frac{q}{N} ⋅ {2}^{α + 1 - {log}_{2} q} = {Δ}_{r}$ so we have $\begin{matrix}ϕ \left({ct}_{error}\right) & = {Δ}_{r} ⋅ \left(\overline{e}+{e}_{_}⋅{Δ}_{r}^{- 1}+\left({e}_{KS}+{e}_{MS}\right)⋅\frac{N}{q}\right) + {e}_{BR} \\ & = {Δ}_{r} ⋅ \left(\overline{e}+{e}_{_}⋅{Δ}_{r}^{- 1}+{e}_{KS}⋅\frac{N}{q}\right) + {e}_{BR} + {e}_{MS} ⋅ {{\frac{N}{q} ⋅ {Δ}_{r}}_{︸}}_{{2}^{α + 1 - {log}_{2} q}}\end{matrix}$

In the end, we have $\begin{matrix}ϕ \left({ct}_{out}\right) & = {Δ}_{m} ⋅ m + \overline{e} ⋅ {Δ}_{r} - \overline{e} ⋅ {Δ}_{r} \\ & + {e}_{_} - {Δ}_{r} ⋅ \left(\overline{e}+{e}_{_}⋅{Δ}_{r}^{- 1}+{e}_{KS}⋅\frac{N}{q}\right) - {e}_{BR} - {e}_{MS} ⋅ {2}^{α + 1 - {log}_{2} q}\end{matrix}$

From this we can find a bound using the fact that ${e}_{_} ⋅ {Δ}_{r}^{- 1} < \frac{1}{2}$ and with the hypothesis that ${e}_{KS} ⋅ \frac{N}{q} < \frac{1}{2}$ $\left|{e}_{out}\right| < \frac{3 ⋅ {Δ}_{r}}{2} + \left|{e}_{MS}\right| ⋅ {2}^{α + 1 - {log}_{2} q} + \left|{e}_{BR}\right|$

This bound can be used to apply once again the algorithm to remove more noise. If we want to track the variance and not the bounds of the noise, we can do the following. Let *e*_{round} be a uniform value in ] - 0.5,0.5] such that ${e}_{_} ⋅ {Δ}_{r}^{- 1} + {e}_{KS} ⋅ \frac{N}{q} = {e}_{_} ⋅ {Δ}_{r}^{- 1} + {e}_{KS} ⋅ \frac{N}{q} + {e}_{round}$

So we have $\begin{matrix}ϕ \left({ct}_{out}\right) & = {Δ}_{m} ⋅ m + {e}_{_} - {e}_{BR} - {e}_{MS} ⋅ {2}^{α + 1 - {log}_{2} q} \\ & - {Δ}_{r} ⋅ \left({e}_{_}⋅{Δ}_{r}^{- 1}+{e}_{KS}⋅\frac{N}{q}+{e}_{round}\right) \\ & = {Δ}_{m} ⋅ m - {e}_{BR} - {e}_{MS} ⋅ {2}^{α + 1 - {log}_{2} q} \\ & - {Δ}_{r} ⋅ \left({e}_{round}+{e}_{KS}⋅\frac{N}{q}\right)\end{matrix}$

Let us study the distribution of $X = {E}_{round} + {E}_{KS} ⋅ \frac{N}{q}$. This distribution has values bounded by ±1 and so we know that Var(*X*) is smaller than the variance of the distribution that maximizes the variance on the interval [-1,1]. We know this variance to be the 2-point distribution with $\frac{1}{2}$, the probability of having ±1, e.g., a variance of 1. So we have $Var \left(Err\left({ct}_{out}\right)\right) \leq {σ}_{BR}^{2} + {2}^{2 ⋅ \left(α+1-{log}_{2}q\right)} ⋅ {σ}_{MS}^{2} + {Δ}_{r}^{2}$ with ${σ}_{BR}^{2}$, the variance of the noise at the output of a blind rotate and ${σ}_{MS}^{2}$, the noise variance added by the modulus switching.

Below an iterated version of the above bootstrap algorithm is presented.

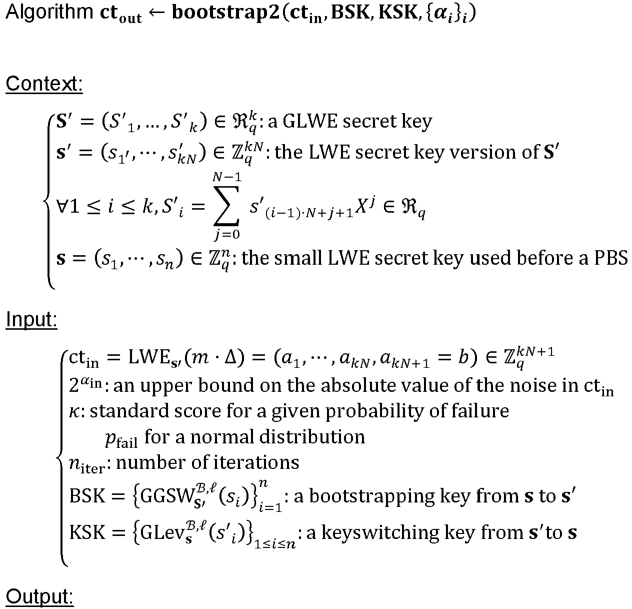

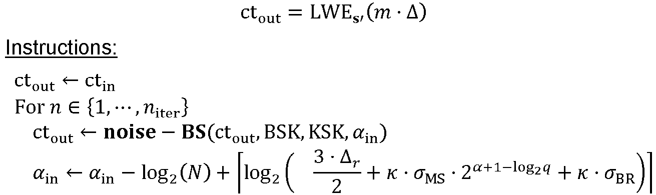

Figure 4 schematically shows an example of an embodiment of a homomorphic bootstrapping. The bootstrapping of figure 4 is similar to that of figure 3a. From a first ciphertext having a message term and an error term, the error term is extracted and then subtracted from the first ciphertext. However, by performing pre-processing, and adapting the subtraction part to account for said pre-processing, a more efficient noise reduction is achieved.

Shown in figure 4 is an input ciphertext 401. The input ciphertext 401 is assumed to be encrypted according to a first, large key. The ciphertext is keyswitched in a first keyswitch 431 to a second small key. This may increase the noise. Following the keyswitch a rounding operation 440 is performed. In this way a first ciphertext 411 is obtained.

Rounding reduces the number of bits to represent the message and error term. For example, for an LWE encrypted ciphertext (*aᵢ*, *b*) with a modulus that is a power of two, rounding may be implemented as (round( *aᵢ* div 2*^{x}*) * 2*^{x}*, round( *b* div 2*^{x}*) * 2*^{x}* ). Wherein round implements a rounding operation, e.g., rounding to the nearest integer. If the modulus *q* is, say, a power of *p,* the rounding may be implemented as (round( *aᵢ* div *p^{x}*) * *p^{x}*, round( *b* div *p^{x}*) * *p^{x}* ).

The rounding zeroizes the least significant bits in the mask (*aᵢ*) and in the body (*b*), which prevents the modulus switching of the PBS of adding noise.

From first ciphertext 411 the message is removed by a shift left 420; This produces a second ciphertext 412. The second ciphertext 412 is followed by a programmable bootstrap 450. The programmable bootstrap 450 moves the error term of first ciphertext 411 back to the right. In this way the third ciphertext 413, with the isolated error term is obtained. Note that in this embodiment, the input to the programmable bootstrap has been rounded before the programmable bootstrap.

As programable bootstrap 450 typically produces an output encrypted in the first, large, key, while first ciphertext 411 is encrypted with the second, small, key a further keyswitching is performed. First ciphertext 411 is keyswitched in a second keyswitching 432 to produce fourth ciphertext 414. In subtraction 460, the third ciphertext 413 is subtracted from fourth ciphertext 414 thus obtaining the output ciphertext 402.

The third ciphertext may thus be obtained by keyswitching the input ciphertext from the first key to the second key, rounding, shifting the ciphertext left, and applying the programmable bootstrap, thus obtaining the third ciphertext.

In an embodiment according to figure 3a, the polynomial size N is constrained with the size of the noise that is removed-unlike the classical PBS wherein N is constrained with

the size of the message. In an embodiment according to figure 4, the size of the removed noise does not impact the choice of N thus making it a better alternative to remove a large noise term.

In this embodiment of the bootstrap all the noise reduction is done at once with a single PBS. No iteration of this embodiment is needed to further reduce noise. This makes this embodiment considerably faster for a large noise reduction. This is achieved by converting the input ciphertext into a ciphertext containing a large amount of error and at the same time having a small amount of non-zero data in it. This can be achieved by rounding the ciphertext, preferably to the most significant bit possible that will not compromise the message; rounding to a lower degree will work as well, just less efficiently so. To avoid that a subsequent keyswitching would void the result of the rounding, a keyswitching operation to the small key is done before the rounding operation.

From here the algorithm is split into two paths. In the one path, is a keyswitch back to the big key, and in the other path, shifting left to remove the message part and computing a PBS on the error. Interestingly, as a rounding already took place prior to the PBS, there will be no rounding in the modulus switch of this PBS, hence no new noise is added. This means that a look-up table (LUT) can be used without redundancy, that computes the identity function re-scaled to the right position. No approximate LUT evaluation is needed. This enables having a smaller polynomial for this bootstrapping because no redundancy is needed. The last step is the computation of the subtraction to get the desired output.

We have to consider the following cryptographic parameters:
- secret keys: *n, k, N*
- shrinking keyswitch: ℓ_{KS}, 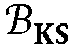
- enlarging keyswitch: ℓ_{KS},, 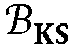 ,
- rounding: Δ_{round}
- blind rotation: ℓ_{BR}, 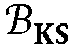

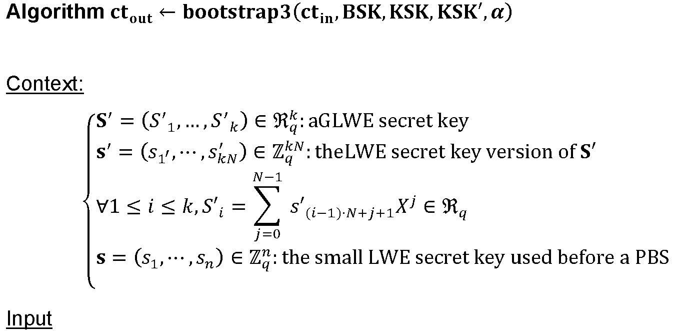

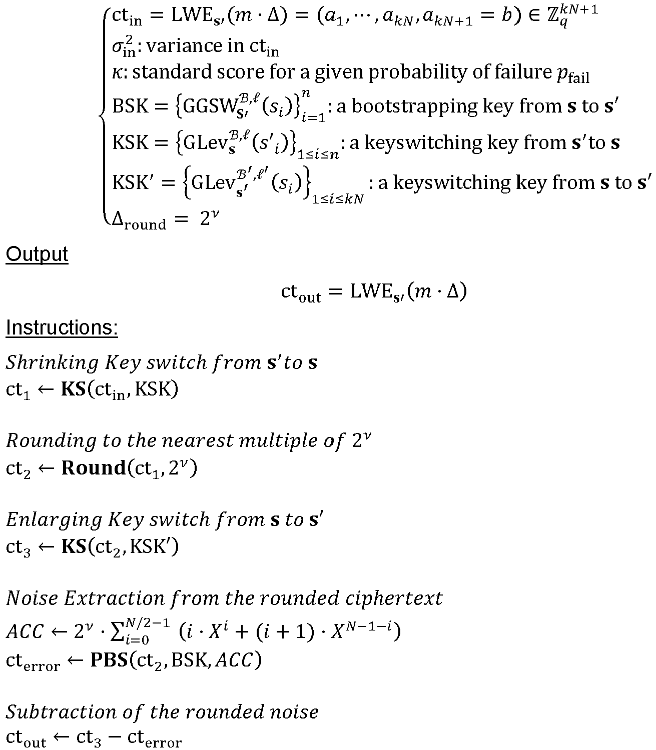

In a homomorphic computation in which noise is reduced when noise may have become too large, e.g., after every few operations, the bootstrapping algorithm may be used to reduce error, e.g., as a replacement of a conventional PBS. The algorithm is capable of performing a bootstrapping operation under various conditions. For example, the equations below define conditions that enhance the noise reduction and reliability of the algorithm. These equations serve as preferred conditions or guidelines, but are not to be construed as mandatory requirements for the functioning of the algorithm. By following these guidelines, users can reduce the chance of failure or suboptimal results. For example, the above algorithms reduce noise and keeps the correctness if,
1. small enough input noise, $κ \sqrt{{σ}_{in}^{2} + {σ}_{KS}^{2} + {σ}_{round}^{2}} \leq \frac{Δ}{2}$
2. exact decomposition for the enlarging keyswitch: ${l}_{KS ′} ⋅ {log}_{2} \left({B}_{KS ′}\right) \geq {log}_{2} \left(\frac{q}{{Δ}_{round}}\right)$
3. big enough polynomials, ${log}_{2} \left(\frac{κ \sqrt{{σ}_{in}^{2} + {σ}_{KS}^{2} + {σ}_{round}^{2}}}{{Δ}_{round}}\right) \leq {log}_{2} \left(N\right)$
4. small enough output noise, ${σ}_{out} = \sqrt{{σ}_{KS ′}^{2} + {σ}_{BR}^{2}} ≪ \frac{Δ}{2 ⋅ κ}$. The enlarging KS has no rounding error if we have item 2 above.
5. keep a bit of padding before the error to BR

In this algorithm, *κ* is a standard score used to build a confidence interval, ${σ}_{in}^{2}$ is the input variance, ${σ}_{KS}^{2}$ is the added variance during keyswitch, ${σ}_{round}^{2}$ is the added variance during rounding, Δ is a scaling factor, e.g., $\frac{q}{{2}^{p + 1}}$ with *q* the ciphertext modulus and *p* the precision, ℓ_{KS}, and 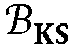 , are the decomposition level and base of the keyswitch, Δ_{round} indicates where we round.

The algorithm is presented for a normal noise distribution since it uses *κ* to build a confidence interval. The skilled person could adapt this to work with other noise distributions, such as uniform, bounded, etc. For example, equation 1 above could become ${e}_{in} + {e}_{KS} + {e}_{round} < \frac{Δ}{2}$ . The algorithm may be further improved with shared randomness secret keys. For example, one could, for all 1 ≤ *i* ≤ *n* we set *sᵢ* = *s'ᵢ.* As a result, the first keyswitch is faster and adds less noise *σ*_{KS}, while the second keyswitch is free and adds no noise *σ*_{KS'} = 0. More information on shared randomness secret keys can be found in the paper "Faster Secret Keys for (T)FHE", by Loris Bergerat, Ilaria Chillotti, Damien Ligier, Jean-Baptiste Orfila, Adeline Roux-Langlois, Samuel Tap, available as paper 2023/979 at the Cryptology Archive.

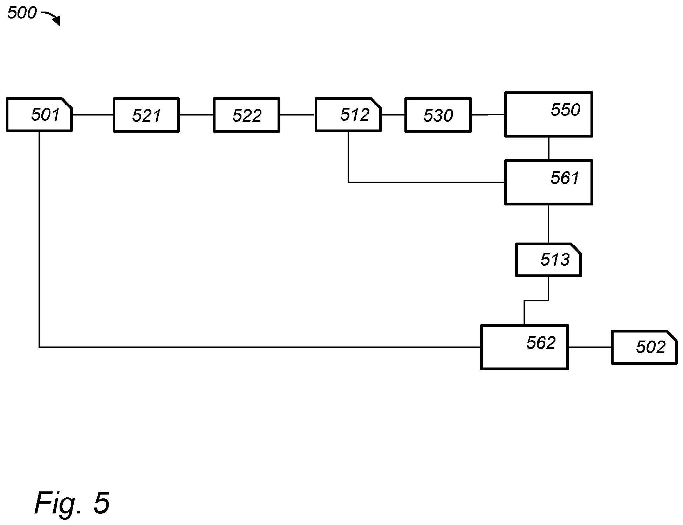

**Figure 5** schematically shows an example of an embodiment of a homomorphic bootstrapping 500. Like the embodiments discussed with reference to figures 2a-4, also this embodiment isolates an error term and subtract the isolated error from a ciphertext that comprises both the error term and a message term. In this way the error is removed, due to noise added in the isolation, etc., the resulting ciphertext still has noise, but it is reduced compared to the original ciphertext. The embodiment of figure 5 differs from the previous embodiment in the way the error term is isolated.

Shown in figure 5 is an input ciphertext 501. To obtain a second ciphertext 512 the message term in ciphertext 501 is zeroized. For example, ciphertext 501 may be shifted left 521 and then shifted right 522. Whereas a shift right is directly supported by the underlying homomorphic cryptography, the shift right operation is not as such. Interestingly, the inventors found that the shift right operation will nevertheless approximate the shift right operation, though at the expense of additional noise in the message part.

For example, given an LWE ciphertext (*aᵢ*, *b*), the message term can be removed by $\left[\left({a}_{i}∗{2}^{x}\right) mod q\right] / {2}^{x} , \left[\left(b∗{2}^{x}\right) mod q\right] / {2}^{x}$ The multiplication term, * 2*^{x}*, removes the most significant part of the ciphertext including the message and puts the noise in a more significant part of the ciphertext; this is the shift left operation. The division term, / 2*^{x}*, rescales the noise to the same place as in input ciphertext 501 but also introduces a new error in the most significant part of the plaintext.

Accordingly, second ciphertext 512 has the isolated error term, but also additional noise in the message part of the ciphertext. Second ciphertext 512 may be regarded as an encryption of a small but random message. A PBS 550 is then performed to isolate this new noise in the message part. Before the PBS, a keyswitch 530 is performed to switch to the small key. The result of the PBS 550 is then subtracted in first subtraction 561 from second ciphertext 512 to obtain the third ciphertext. Finally, the third ciphertext 513 is subtracted in second subtraction 562 from input ciphertext 501 to produce the output ciphertext 502.

PBS 550 may implement the identity function. This works, because the noise introduced by shift right 522 is typically small, in particular smaller than the message. A PBS that bootstraps this noise value, in this case performing the identify function while reducing noise, is much more resource effective than performing, say, PBS directly on input ciphertext 501. The latter PBS would have to work for the full message space, while PBS 550 only has to work on a much smaller message space.

Like the embodiments of figure 4, also in this embodiment is all the noise reduction done at once with a single PBS. An advantage of the embodiments of figure 5 is that only a single keyswitch is needed instead of two as figure 4. The idea is to shift left the input ciphertext, which is assumed to be encrypted with the first, large LWE key, to put the noise in the most significant bits and shift right the ciphertext. The shift right will add some bounded random noise in the MSBs of the plaintext. If the shift right is big enough, there will be a padding bit in the MSB of the plaintext. We then do a keyswitch and an exact bootstrapping with the identity LUT. The ciphertext we end up with can be subtracted to the one after the shift right which will remove the noise in the MSBs of the plaintext introduced by this shift right. Finally, we subtract the ciphertext we get with the input ciphertext which will reduce the noise.

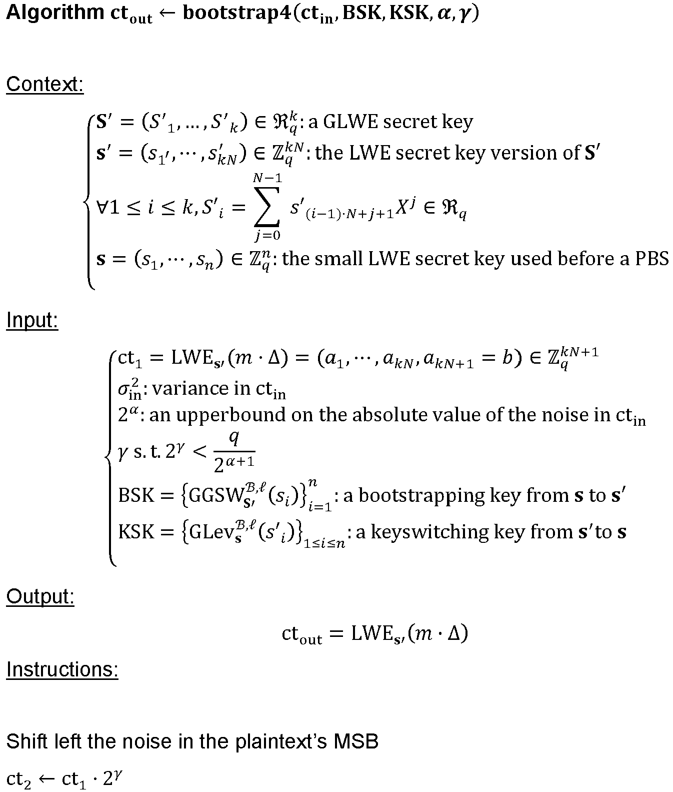

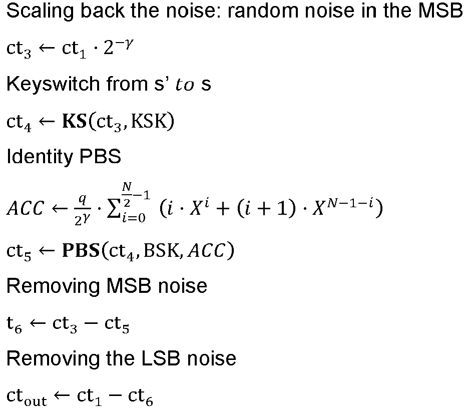

If desired, a bit of padding after scaling back the noise can be guaranteed. This is convenient, for example, if a conventional PBS may later be applied to the ciphertext. By hypothesis, we have $\left|{e}_{in}\right| < {2}^{α} {and 2}^{γ} < \frac{q}{{2}^{α + 1}} .$

Let ${ct}_{2} = {LWE}_{s ′} \left(m⋅Δ\right) = \left({a}_{1},⋯,{a}_{kN},{a}_{kN + 1}=b\right) ∈ {ℤ}_{q}^{kN + 1}$ with $b = {\sum }_{i = 1}^{kN} {a}_{i} ⋅ {s}_{i} + {2}^{γ} ⋅ {e}_{in} mod q$ . Let $\overline{e} ∈ ℤ$ such that $b = {\sum }_{i = 1}^{kN} {a}_{i} ⋅ {s}_{i} + {2}^{γ} ⋅ {e}_{in} + \overline{e} ⋅ q$. Let us look at the phase of ct₃ = (*a'*₁, ··· , *a'*_{*kN*+1}). By construction, we know that ∀*i* ∈ [[1, *k* · *N* + 1]], ${a}_{i} ⋅ {2}^{- γ} ∈ ℤ$. We have $\begin{matrix}ϕ \left({ct}_{3}\right) = b ′ - {\sum }_{i = 1}^{kN} a {′}_{i} \\ = {2}^{- γ} ⋅ \left(b-{\sum }_{i = 1}^{kN} {a}_{i} ⋅ {s}_{i}\right) \\ = {2}^{- γ} ⋅ \left({\sum }_{i = 1}^{kN} {a}_{i} ⋅ {s}_{i} + {2}^{γ} ⋅ {e}_{in} + \overline{e} ⋅ q - {\sum }_{i = 1}^{kN} {a}_{i} ⋅ {s}_{i}\right) \\ = {e}_{in} + {2}^{- γ} ⋅ \overline{e} ⋅ q\end{matrix}$

To perform the PBS, we need to have at least one padding bit, e.g., we need $\left|{e}_{in}+{2}^{- γ}⋅\overline{e}⋅q\right| < \frac{q}{2}$ . First let us try to find a condition to ensure ${2}^{- γ} ⋅ \overline{e} ⋅ q < \frac{q}{2}$, e.g., *e̅ < 2*^{*γ*-1}. To do so, we need to study the distribution of *e̅*

Let $Y = {\sum }_{i = 1}^{kN} {a}_{i} ⋅ {s}_{i} + {2}^{γ} ⋅ {e}_{in}$, e.g., *b* = *Y*mod*q.* Let us study the distribution of *Y.* We have $\begin{matrix}Var \left({a}_{i}⋅{s}_{i}\right) = {{Var \left({a}_{i}\right)}_{︸}}_{= \frac{{q}^{2}}{12}} ⋅ {{Var \left({s}_{i}\right)}_{︸}}_{= \frac{1}{4}} + Var \left({a}_{i}\right) ⋅ {{E {\left({s}_{i}\right)}^{2}}_{︸}}_{= \frac{1}{4}} + Var \left({s}_{i}\right) ⋅ {{E {\left({a}_{i}\right)}^{2}}_{︸}}_{= - \frac{1}{{2}^{2}}} \\ = \frac{{q}^{2}}{24} + \frac{1}{16} \approx \frac{{q}^{2}}{24}\end{matrix}$

Using the central limit theorem, with ${σ}_{in}^{2}$, the noise variance of the input ciphertext ct₁, we have $Y ∼ N \left({{- \frac{\sqrt{k ⋅ N}}{2}}_{︸}}_{\approx 0},\frac{k ⋅ N ⋅ {q}^{2}}{24}+\frac{k ⋅ N}{{{16}_{︸}}_{\approx 0}}+{2}^{2 ⋅ γ}⋅{σ}_{in}^{2}\right)$

Let us assume $- \frac{\sqrt{k ⋅ N}}{2}$ to be negligible. We can for instance, subtract it from Y to center the distribution. Now, notice that $∀ j ∈ ℕ , \left|\overline{e}\right| < j ⇔ \left|Y\right| < j ⋅ q$ We can use the previous distribution to build a confidence interval with ${σ}^{2} = \frac{k ⋅ N ⋅ {q}^{2}}{24} + \frac{k ⋅ N}{{{16}_{︸}}_{\approx 0}} + {2}^{2 ⋅ γ} ⋅ {σ}_{in}^{2}$ $ℙ \left(\left|Y\right|<κ⋅σ\right) = erf \left(\frac{κ}{\sqrt{2}}\right)$ To have *e̅* < 2^{*γ*-1} with a probability of success $erf \left(\frac{κ}{\sqrt{2}}\right)$, we need |*Y*| *< q* · 2^{*γ*-1} with the same probability, e.g., we need ${κ}^{2} \left(\frac{k ⋅ N ⋅ {q}^{2}}{24}+\frac{n}{{{16}_{︸}}_{\approx 0}}+{2}^{2 ⋅ γ}⋅{σ}_{in}^{2}\right) < {q}^{2} ⋅ {2}^{2 ⋅ γ - 2}$ And we know that ${2}^{2 ⋅ γ} ⋅ {σ}_{in}^{2} < {q}^{2}$ so we have ${κ}^{2} ⋅ {q}^{2} ⋅ \left(\frac{k ⋅ N}{24}+1\right) < {q}^{2} ⋅ {2}^{2 ⋅ γ - 2} ⇔ γ > \frac{1}{2} ⋅ {log}_{2} \left({κ}^{2}⋅\left(\frac{k ⋅ N}{24}+1\right)\right) + 1$ We have *e̅* < 2^{*γ*-1}, will meet the condition $\left|{e}_{in}+{2}^{- γ}⋅\overline{e}⋅q\right| < \frac{q}{2}$ that is needed to guarantee a padding bit. Indeed, $\left|{e}_{in}+{2}^{- γ}⋅\overline{e}⋅q\right| \begin{matrix}< \frac{q}{{2}^{γ + 1}} + \left({2}^{γ - 1}-1\right) ⋅ q ⋅ {2}^{- γ} \\ = \frac{q}{2} - \frac{q}{{2}^{γ + 1}} < \frac{q}{2}\end{matrix}$

For example, for *κ* = 8.3 and *k* · *N* = 2¹⁴, we may *use y* > 8.76 which is fine here as we only use *N =* 2¹⁴ in this example, when the precision of the message is 8. *As y* ≥ *precision +* 1, we have *γ* > 9 > 8.76.

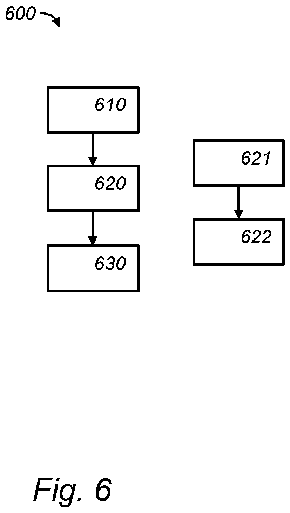

**Figure 6** schematically shows an example of an embodiment of a method 600 for reducing an error term in a ciphertext. Method 600 may be computer implemented and comprises
- obtaining (610) an input ciphertext, the input ciphertext comprising a homomorphic encryption of a message term (*m̃*),
- homomorphically extracting the error term (620) from a first ciphertext derived from the input ciphertext, the first ciphertext comprising a homomorphic encryption of a message term (*m̃*) and having an error term (*e*), obtaining a third ciphertext being a noisy homomorphic encryption of the error term and possibly additional noise, the extracting comprising
- obtaining (621) a second ciphertext by removing the message term from the first ciphertext,
- applying (622) a programmable bootstrap to the second ciphertext, obtaining therefrom the third ciphertext
- homomorphically subtracting (630) the third ciphertext from a ciphertext comprising the message term (*m̃*), the error term (*e*), and possibly additional noise.

For example, the method may be computer implemented methods. For example, obtaining an input ciphertext may be done using a communication interface, e.g., an electronic interface, a network interface, a memory interface, etc. For example, storing or retrieving computer implemented methods may be done from an electronic storage, e.g., a memory, a hard drive, etc. For example, extracting the error term, and subtracting the error term may be done using an electronic computing device, e.g., a computer.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform an embodiment of method 600. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform an embodiment of the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

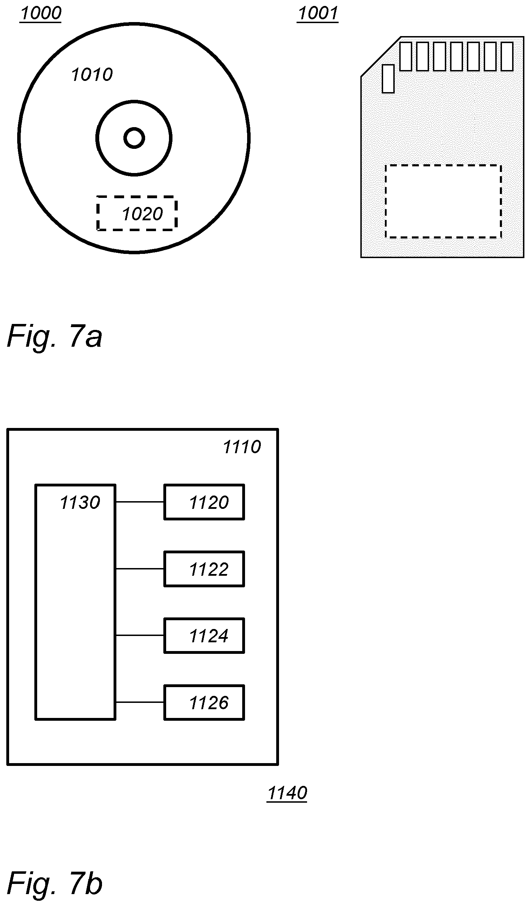

**Figure 7a** shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a method for reducing an error term according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform an embodiment of said method for reducing an error term.

**Figure 7b** shows in a schematic representation of a processor system 1140 according to an embodiment of a system for reducing an error term. The processor system comprises one or more integrated circuits 1110. The architecture of the one or more integrated circuits 1110 is schematically shown in Figure 7b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., an error term reduction device may comprise a processor circuit and a memory circuit, the processor being arranged to execute software stored in the memory circuit. For example, the processor circuit may be an Intel Core i7 processor, ARM Cortex-R8, etc. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

While system 1140 is shown as including one of each described component, the various components may be duplicated in various embodiments. For example, the processing unit 1120 may include multiple microprocessors that are configured to independently execute the methods described herein or are configured to perform elements or subroutines of the methods described herein such that the multiple processors cooperate to achieve the functionality described herein. Further, where the system 1140 is implemented in a cloud computing system, the various hardware components may belong to separate physical systems. For example, processor 1120 may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. Method (600) for reducing an error term in a ciphertext in a fully homomorphic cryptographic scheme supporting at least a homomorphic addition and a programmable bootstrap, the method comprising
- obtaining (610) an input ciphertext, the input ciphertext comprising a homomorphic encryption of a message term (*m̃*),
- homomorphically extracting the error term (620) from a first ciphertext derived from the input ciphertext, the first ciphertext comprising a homomorphic encryption of a message term (*m̃*) and having an error term (*e*), obtaining a third ciphertext being a noisy homomorphic encryption of the error term and possibly additional noise, the extracting comprising
- obtaining (621) a second ciphertext by removing the message term from the first ciphertext,
- applying (622) a programmable bootstrap to the second ciphertext, obtaining therefrom the third ciphertext
- homomorphically subtracting (630) the third ciphertext from a ciphertext comprising the message term (*m̃*), the error term (*e*), and possibly additional noise.

2. Method for reducing an error term as in Claim 1, wherein removing the message term comprises shifting left a ciphertext that comprises the message term, the error term and possibly additional noise to remove the message term but keep the error term.

3. Method for reducing an error term as in Claim 2, wherein the programmable bootstrap implements a shift right over the same number of bits as the shift left.

4. Method for reducing an error term as in any of Claims 2-3, wherein shifting the ciphertext left causes an upper bound on the error term to start at the most significant bit or second most significant bit.

5. Method for reducing an error term as in any of the preceding claims, wherein the input ciphertext is encrypted according to a first key, a keyswitching operation being defined from the first key to a smaller second key, the second key being smaller than the first key, the input to the programmable bootstrap having been keyswitched to the second key.

6. Method for reducing an error term as in Claim 5, comprising shifting the first ciphertext left, keyswitching from the first key to the second key, and applying the programmable bootstrap, thus obtaining the third ciphertext.

7. Method for reducing an error term as in any of the preceding claims, wherein the input to the programmable bootstrap has been rounded before the programmable bootstrap.

8. Method for reducing an error term as in Claim 7, comprising keyswitching the input ciphertext from the first key to the second key, rounding, shifting the ciphertext left, and applying the programmable bootstrap, thus obtaining the third ciphertext.

9. Method for reducing an error term as in Claim 7 or 8, wherein homomorphically subtracting the third ciphertext comprises keyswitching the rounded ciphertext from the second key to the first key and subtracting the third ciphertext therefrom.

10. Method for reducing an error term as in Claim 5, wherein obtaining a second ciphertext comprises zeroizing at least a most significant part of the message term in the ciphertext, keyswitching from the first key to the second key, and applying a programmable bootstrap, wherein the programmable bootstrap implements an identity function.

11. Method for reducing an error term as in Claim 10, wherein the output of the programmable bootstrap is subtracted from the zeroized ciphertext to obtain the third ciphertext.

12. Method for reducing an error term as in any of the preceding claims, wherein a method for reducing an error term is repeated to further reduce the error term.

13. Method for reducing an error term as in any of the preceding claims, wherein the message term comprises at least 6 message bits, preferably at least 8 message bits, preferably at least 10 message bits, preferably at least 12 message bits.

14. Method for reducing an error term as in any of the preceding claims, wherein the ciphertext is an LWE or GLWE ciphertext.

15. Method for reducing an error term as in any of the preceding claims, wherein the message term is a multiple of a message.

16. Method for reducing an error term as in any of the preceding claims, wherein a most significant bit of the input ciphertext is used for the message term.

17. Method for reducing an error term as in any of the preceding claims, comprising
- obtaining a desired error reduction level,
- iterating the method for reducing an error term to reach the desired error reduction level.

18. A system comprising: one or more processors; and one or more storage devices storing instructions that, when executed by the one or more processors, cause the one or more processors to perform operations for a method according to any of the preceding claims.

19. A non-transitory computer storage medium encoded with instructions that, when executed by one or more computers, cause the one or more computers to perform operations according to any of Claims 1-17.

## Patentansprüche

1. Verfahren (600) zum Reduzieren eines Fehlerterms in einem Chiffrat in einem vollständig homomorphen kryptographischen Schema, das zumindest eine homomorphe Addition und einen programmierbaren Bootstrap unterstützt, wobei das Verfahren umfasst
- Erhalten (610) eines Eingabe-Chiffrats, wobei das Eingabe-Chiffrat eine homomorphe Verschlüsselung eines Nachrichtenterms (*m̃*) umfasst,
- homomorphes Extrahieren des Fehlerterms (620) aus einem ersten Chiffrat, das von dem Eingabe-Chiffrat abgeleitet ist, wobei das erste Chiffrat eine homomorphe Verschlüsselung eines Nachrichtenterms (*m̃*) umfasst und einen Fehlerterm (*e*) aufweist, wobei ein drittes Chiffrat erhalten wird, das eine verrauschte homomorphe Verschlüsselung des Fehlerterms und möglicherweise zusätzliches Rauschen umfasst, wobei das Extrahieren umfasst
- Erhalten (621) eines zweiten Chiffrats durch Entfernen des Nachrichtenterms aus dem ersten Chiffrat,
- Anwenden (622) eines programmierbaren Bootstraps auf das zweite Chiffrat, wobei daraus das dritte Chiffrat erhalten wird
- homomorphes Subtrahieren (630) des dritten Chiffrats von einem Chiffrat, das den Nachrichtenterm (*m̃*), den Fehlerterm (*e*) und möglicherweise zusätzliches Rauschen umfasst.

2. Verfahren zum Reduzieren eines Fehlerterms nach Anspruch 1, wobei das Entfernen des Nachrichtenterms ein Verschieben eines Chiffrats nach links umfasst, das den Nachrichtenterm, den Fehlerterm und möglicherweise zusätzliches Rauschen umfasst, um den Nachrichtenterm zu entfernen, aber den Fehlerterm beizubehalten.

3. Verfahren zum Reduzieren eines Fehlerterms nach Anspruch 2, wobei der programmierbare Bootstrap eine Verschiebung nach rechts um dieselbe Anzahl von Bits wie die Verschiebung nach links implementiert.

4. Verfahren zum Reduzieren eines Fehlerterms nach einem der Ansprüche 2-3, wobei das Verschieben des Chiffrats nach links bewirkt, dass eine obere Grenze des Fehlerterms an dem höchstwertigen Bit oder dem zweithöchstwertigen Bit beginnt.

5. Verfahren zum Reduzieren eines Fehlerterms nach einem der vorhergehenden Ansprüche, wobei das Eingabe-Chiffrat gemäß einem ersten Schlüssel verschlüsselt ist, wobei eine Keyswitching-Operation von dem ersten Schlüssel zu einem kleineren zweiten Schlüssel definiert ist, wobei der zweite Schlüssel kleiner als der erste Schlüssel ist, wobei die Eingabe für den programmierbaren Bootstrap durch Keyswitching auf den zweiten Schlüssel umgeschlüsselt worden ist.

6. Verfahren zum Reduzieren eines Fehlerterms nach Anspruch 5, umfassend ein Verschieben des ersten Chiffrats nach links, Keyswitching von dem ersten Schlüssel zu dem zweiten Schlüssel und Anwenden des programmierbaren Bootstraps, wodurch das dritte Chiffrat erhalten wird.

7. Verfahren zum Reduzieren eines Fehlerterms nach einem der vorhergehenden Ansprüche, wobei die Eingabe für den programmierbaren Bootstrap vor dem programmierbaren Bootstrap gerundet worden ist.

8. Verfahren zum Reduzieren eines Fehlerterms nach Anspruch 7, umfassend Keyswitching des Eingabe-Chiffrats von dem ersten Schlüssel zu dem zweiten Schlüssel, Runden, Verschieben des Chiffrats nach links und Anwenden des programmierbaren Bootstraps, wodurch das dritte Chiffrat erhalten wird.

9. Verfahren zum Reduzieren eines Fehlerterms nach Anspruch 7 oder 8, wobei das homomorphe Subtrahieren des dritten Chiffrats Keyswitching des gerundeten Chiffrats von dem zweiten Schlüssel zu dem ersten Schlüssel und Subtrahieren des dritten Chiffrats davon umfasst.

10. Verfahren zum Reduzieren eines Fehlerterms nach Anspruch 5, wobei das Erhalten eines zweiten Chiffrats ein Nullsetzen zumindest eines höchstwertigen Teils des Nachrichtenterms in dem Chiffrat, Keyswitching von dem ersten Schlüssel zu dem zweiten Schlüssel und Anwenden eines programmierbaren Bootstraps umfasst, wobei der programmierbare Bootstrap eine Identitätsfunktion implementiert.

11. Verfahren zum Reduzieren eines Fehlerterms nach Anspruch 10, wobei die Ausgabe des programmierbaren Bootstraps von dem nullgesetzten Chiffrat subtrahiert wird, um das dritte Chiffrat zu erhalten.

12. Verfahren zum Reduzieren eines Fehlerterms nach einem der vorhergehenden Ansprüche, wobei ein Verfahren zum Reduzieren eines Fehlerterms wiederholt wird, um den Fehlerterm weiter zu reduzieren.

13. Verfahren zum Reduzieren eines Fehlerterms nach einem der vorhergehenden Ansprüche, wobei der Nachrichtenterm zumindest 6 Nachrichtenbits, vorzugsweise zumindest 8 Nachrichtenbits, vorzugsweise zumindest 10 Nachrichtenbits, vorzugsweise zumindest 12 Nachrichtenbits umfasst.

14. Verfahren zum Reduzieren eines Fehlerterms nach einem der vorhergehenden Ansprüche, wobei das Chiffrat ein LWE- oder GLWE-Chiffrat ist.

15. Verfahren zum Reduzieren eines Fehlerterms nach einem der vorhergehenden Ansprüche, wobei der Nachrichtenterm ein Vielfaches einer Nachricht ist.

16. Verfahren zum Reduzieren eines Fehlerterms nach einem der vorhergehenden Ansprüche, wobei ein höchstwertiges Bit des Eingabe-Chiffrats für den Nachrichtenterm verwendet wird.

17. Verfahren zum Reduzieren eines Fehlerterms nach einem der vorhergehenden Ansprüche, umfassend
- Erhalten eines gewünschten Fehlerreduktionsniveaus,
- Iterieren des Verfahrens zum Reduzieren eines Fehlerterms, um das gewünschte Fehlerreduktionsniveau zu erreichen.

18. Ein System, umfassend: einen oder mehrere Prozessoren; und eine oder mehrere Speichervorrichtungen, die Anweisungen speichern, die, wenn sie durch den einen oder die mehreren Prozessoren ausgeführt werden, den einen oder die mehreren Prozessoren veranlassen, Operationen für ein Verfahren nach einem der vorhergehenden Ansprüche durchzuführen.

19. Ein nichttransitorisches Computerspeichermedium, das mit Anweisungen codiert ist, die, wenn sie durch einen oder mehrere Computer ausgeführt werden, den einen oder die mehreren Computer veranlassen, Operationen nach einem der Ansprüche 1-17 durchzuführen.

## Revendications

1. Procédé (600) pour réduire un terme d'erreur dans un texte chiffré dans un schéma cryptographique entièrement homomorphe prenant en charge au moins une addition homomorphe et un bootstrap programmable, le procédé comprenant
- l'obtention (610) d'un texte chiffré d'entrée, le texte chiffré d'entrée comprenant un chiffrement homomorphe d'un terme de message (*m̃*),
- l'extraction homomorphe du terme d'erreur (620) à partir d'un premier texte chiffré dérivé du texte chiffré d'entrée, le premier texte chiffré comprenant un chiffrement homomorphe d'un terme de message (*m̃*) et ayant un terme d'erreur (*e*), obtenant un troisième texte chiffré étant un chiffrement homomorphe bruité du terme d'erreur et éventuellement d'un bruit supplémentaire, l'extraction comprenant
- l'obtention (621) d'un deuxième texte chiffré par retrait du terme de message du premier texte chiffré,
- l'application (622) d'un bootstrap programmable au deuxième texte chiffré, obtenant à partir de celui-ci le troisième texte chiffré
- la soustraction homomorphe (630) du troisième texte chiffré d'un texte chiffré comprenant le terme de message (*m̃*), le terme d'erreur (*e*), et éventuellement un bruit supplémentaire.

2. Procédé pour réduire un terme d'erreur selon la revendication 1, dans lequel le retrait du terme de message comprend le décalage à gauche d'un texte chiffré qui comprend le terme de message, le terme d'erreur et éventuellement un bruit supplémentaire afin de retirer le terme de message mais de conserver le terme d'erreur.

3. Procédé pour réduire un terme d'erreur selon la revendication 2, dans lequel le bootstrap programmable met en œuvre un décalage à droite sur le même nombre de bits que le décalage à gauche.

4. Procédé pour réduire un terme d'erreur selon l'une quelconque des revendications 2 à 3, dans lequel le décalage du texte chiffré à gauche fait commencer une borne supérieure du terme d'erreur au bit de poids fort ou au deuxième bit de poids fort.

5. Procédé pour réduire un terme d'erreur selon l'une quelconque des revendications précédentes, dans lequel le texte chiffré d'entrée est chiffré selon une première clé, une opération de changement de clé étant définie de la première clé vers une deuxième clé plus petite, la deuxième clé étant plus petite que la première clé, l'entrée du bootstrap programmable ayant été soumise à un changement de clé vers la deuxième clé.

6. Procédé pour réduire un terme d'erreur selon la revendication 5, comprenant le décalage à gauche du premier texte chiffré, le changement de clé de la première clé vers la deuxième clé et l'application du bootstrap programmable, obtenant ainsi le troisième texte chiffré.

7. Procédé pour réduire un terme d'erreur selon l'une quelconque des revendications précédentes, dans lequel l'entrée du bootstrap programmable a été arrondie avant le bootstrap programmable.

8. Procédé pour réduire un terme d'erreur selon la revendication 7, comprenant le changement de clé du texte chiffré d'entrée de la première clé vers la deuxième clé, l'arrondi, le décalage à gauche du texte chiffré et l'application du bootstrap programmable, obtenant ainsi le troisième texte chiffré.

9. Procédé pour réduire un terme d'erreur selon la revendication 7 ou 8, dans lequel la soustraction homomorphe du troisième texte chiffré comprend le changement de clé du texte chiffré arrondi de la deuxième clé vers la première clé et la soustraction du troisième texte chiffré de celui-ci.

10. Procédé pour réduire un terme d'erreur selon la revendication 5, dans lequel l'obtention d'un deuxième texte chiffré comprend la mise à zéro d'au moins une partie de poids fort du terme de message dans le texte chiffré, le changement de clé de la première clé vers la deuxième clé et l'application d'un bootstrap programmable, dans lequel le bootstrap programmable met en œuvre une fonction identité.

11. Procédé pour réduire un terme d'erreur selon la revendication 10, dans lequel la sortie du bootstrap programmable est soustraite du texte chiffré mis à zéro pour obtenir le troisième texte chiffré.

12. Procédé pour réduire un terme d'erreur selon l'une quelconque des revendications précédentes, dans lequel un procédé pour réduire un terme d'erreur est répété afin de réduire davantage le terme d'erreur.

13. Procédé pour réduire un terme d'erreur selon l'une quelconque des revendications précédentes, dans lequel le terme de message comprend au moins 6 bits de message, de préférence au moins 8 bits de message, de préférence au moins 10 bits de message, de préférence au moins 12 bits de message.

14. Procédé pour réduire un terme d'erreur selon l'une quelconque des revendications précédentes, dans lequel le texte chiffré est un texte chiffré LWE ou GLWE.

15. Procédé pour réduire un terme d'erreur selon l'une quelconque des revendications précédentes, dans lequel le terme de message est un multiple d'un message.

16. Procédé pour réduire un terme d'erreur selon l'une quelconque des revendications précédentes, dans lequel un bit de poids fort du texte chiffré d'entrée est utilisé pour le terme de message.

17. Procédé pour réduire un terme d'erreur selon l'une quelconque des revendications précédentes, comprenant
- l'obtention d'un niveau souhaité de réduction d'erreur,
- l'itération du procédé pour réduire un terme d'erreur afin d'atteindre le niveau souhaité de réduction d'erreur.

18. Système comprenant : un ou plusieurs processeurs ; et un ou plusieurs dispositifs de stockage stockant des instructions qui, lorsqu'elles sont exécutées par le ou les processeurs, amènent le ou les processeurs à effectuer des opérations pour un procédé selon l'une quelconque des revendications précédentes.

19. Support de stockage informatique non transitoire codé avec des instructions qui, lorsqu'elles sont exécutées par un ou plusieurs ordinateurs, amènent le ou les ordinateurs à effectuer des opérations selon l'une quelconque des revendications 1 à 17.
